# EUROPEAN PATENT APPLICATION

(11) **EP 4 572 424 A1**
(43) Date of publication of application: **18.06.2025**
(21) Application number: 23852934.1
(22) Date of filing: 08.08.2023
(51) Int. Cl.: H04W 52/02, H04W 76/28, H04B 7/06, H04W 72/04, H04W 72/23, H04L 5/00

(54) **METHOD, USER EQUIPMENT, PROCESSING DEVICE AND STORAGE MEDIUM FOR RECEIVING DOWNLINK SIGNAL, AND METHOD AND BASE STATION FOR TRANSMITTING DOWNLINK SIGNAL**

(30) Priority: 10.08.2022 KR 20220100242; 29.09.2022 US 202263411558 P; 04.11.2022 KR 20220146462
(71) Applicant: LG Electronics Inc., Yeongdeungpo-gu Seoul 07336 (KR)
(72) Inventor: MYUNG, Sechang, Seoul 06772 (KR); YANG, Suckchel, Seoul 06772 (KR); LEE, Youngdae, Seoul 06772 (KR); KIM, Seonwook, Seoul 06772 (KR); HWANG, Seunggye, Seoul 06772 (KR)
(74) Representative: Plasseraud IP
(86) International application number: PCT/KR2023/011650
(87) International publication number: WO 2024/035058

(57) **Abstract**

A plurality of DRX configurations associated with each of different resources with respect to at least one from among frequency, time, space and power domain can be provided to a UE by means of a BS. If the BS indicates one of the plurality of DRX configurations, the BS and the UE can operate using the frequency, time, space, or power domain resources associated with the indicated DRX configuration.

## Description

### TECHNICAL FIELD

The present disclosure relates to a wireless communication system.

### BACKGROUND

A variety of technologies, such as machine-to-machine (M2M) communication, machine type communication (MTC), and a variety of devices demanding high data throughput, such as smartphones and tablet personal computers (PCs), have emerged and spread. Accordingly, the volume of data throughput demanded to be processed in a cellular network has rapidly increased. In order to satisfy such rapidly increasing data throughput, carrier aggregation technology or cognitive radio technology for efficiently employing more frequency bands and multiple input multiple output (MIMO) technology or multi-base station (BS) cooperation technology for raising data capacity transmitted on limited frequency resources have been developed.

As more and more communication devices have required greater communication capacity, there has been a need for enhanced mobile broadband (eMBB) communication relative to legacy radio access technology (RAT). In addition, massive machine type communication (mMTC) for providing various services at anytime and anywhere by connecting a plurality of devices and objects to each other is one main issue to be considered in next-generation communication.

Communication system design considering services/user equipment (UEs) sensitive to reliability and latency is also under discussion. The introduction of next-generation RAT is being discussed in consideration of eMBB communication, mMTC, ultra-reliable and low-latency communication (URLLC), and the like.

As the number of services/user equipments (UEs) that a network needs to support increases rapidly, the needs for not only power saving for UEs but also energy saving for the network are gradually increasing.

### DISCLOSURE

### Technical Problem

One object of the present disclosure is to provide methods and procedures for network energy conservation.

Another object of the present disclosure is to provide methods and procedures for transmitting downlink signals to achieve network energy conservation.

The objects to be achieved with the present disclosure are not limited to what has been particularly described hereinabove and other objects not described herein will be more clearly understood by persons skilled in the art from the following detailed description.

### Technical Solution

In an aspect of the present disclosure, provided herein is a method of receiving a downlink signal by a user equipment (UE) in a wireless communication system. The method includes: detecting a synchronization signal block (SSB) on a cell, wherein the SSB includes a primary synchronization signal (PSS), a secondary synchronization signal (SSS), and a physical broadcast channel (PBCH), acquiring time and frequency synchronization with the cell based on the SSB; receiving a plurality of discontinuous reception (DRX) configurations; and based on receiving a first group-common downlink signal indicating a first DRX configuration related to the cell among the plurality of DRX configurations, performing physical downlink control channel (PDCCH) monitoring during an active time according to the first DRX configuration. The plurality of DRX configurations are associated with different resources in at least one of a frequency domain, a time domain, a spatial domain, or a power domain, respectively.

In another aspect of the present disclosure, provided herein is a UE configured to receive a downlink signal in a wireless communication system. The UE includes: at least one transceiver; at least one processor; and at least one computer memory operably connected to the at least one processor and storing instructions that, when executed, cause the at least one processor to perform operations. The operations include: detecting an SSB on a cell, wherein the SSB includes a PSS, an SSS, and a PBCH; acquiring time and frequency synchronization with the cell based on the SSB; receiving a plurality of DRX configurations; and based on receiving a first group-common downlink signal indicating a first DRX configuration related to the cell among the plurality of DRX configurations, performing PDCCH monitoring during an active time according to the first DRX configuration. The plurality of DRX configurations are associated with different resources in at least one of a frequency domain, a time domain, a spatial domain, or a power domain, respectively.

In another aspect of the present disclosure, provided herein is a processing device. The processing device includes: at least one processor; and at least one computer memory operably connected to the at least one processor and storing instructions that, when executed, cause the at least one processor to perform operations. The operations include: detecting an SSB on a cell, wherein the SSB includes a PSS, an SSS, and a PBCH; acquiring time and frequency synchronization with the cell based on the SSB; receiving a plurality of DRX configurations; and based on receiving a first group-common downlink signal indicating a first DRX configuration related to the cell among the plurality of DRX configurations, performing PDCCH monitoring during an active time according to the first DRX configuration. The plurality of DRX configurations are associated with different resources in at least one of a frequency domain, a time domain, a spatial domain, or a power domain, respectively.

In another aspect of the present disclosure, provided herein is a computer-readable storage medium configured to store at least one program code including instructions that, when executed, cause at least one processor to perform operations. The operations include: detecting an SSB on a cell, wherein the SSB includes a PSS, an SSS, and a PBCH; acquiring time and frequency synchronization with the cell based on the SSB; receiving a plurality of DRX configurations; and based on receiving a first group-common downlink signal indicating a first DRX configuration related to the cell among the plurality of DRX configurations, performing PDCCH monitoring during an active time according to the first DRX configuration. The plurality of DRX configurations are associated with different resources in at least one of a frequency domain, a time domain, a spatial domain, or a power domain, respectively.

In another aspect of the present disclosure, provided herein is a method of transmitting, by a base station (BS), a downlink signal to a UE in a wireless communication system. The method includes: transmitting an SSB on a cell, wherein the SSB includes a PSS, an SSS, and a PBCH; transmitting a plurality of DRX configurations; and based on transmitting a first group-common downlink signal indicating a first DRX configuration related to the cell among the plurality of DRX configurations, transmitting a PDCCH during an active time according to the first DRX configuration. The plurality of DRX configurations are associated with different resources in at least one of a frequency domain, a time domain, a spatial domain, or a power domain, respectively.

In a further aspect of the present disclosure, provided herein is a BS configured to transmit a downlink signal to a UE in a wireless communication system. The BS includes: at least one transceiver; at least one processor; and at least one computer memory operably connected to the at least one processor and storing instructions that, when executed, cause the at least one processor to perform operations. The method includes: transmitting an SSB on a cell, wherein the SSB includes a PSS, an SSS, and a PBCH; transmitting a plurality of DRX configurations; and based on transmitting a first group-common downlink signal indicating a first DRX configuration related to the cell among the plurality of DRX configurations, transmitting a PDCCH during an active time according to the first DRX configuration. The plurality of DRX configurations are associated with different resources in at least one of a frequency domain, a time domain, a spatial domain, or a power domain, respectively.

In each aspect of the present disclosure, the plurality of DRX configurations may include a DRX configuration associated with a BWP different from a BWP associated with the first DRX configuration.

In each aspect of the present disclosure, the plurality of DRX configurations may include a DRX configuration associated with a time-domain ON/OFF pattern different from a time-domain ON/OFF pattern associated with the first DRX configuration.

In each aspect of the present disclosure, the plurality of DRX configurations may include a DRX configuration associated with a number of antenna ports different from a number of antenna ports associated with the first DRX configuration.

In each aspect of the present disclosure, the plurality of DRX configurations may include a DRX configuration associated with a power parameter different from a power parameter associated with the first DRX configuration.

In each aspect of the present disclosure, the method of the UE or operations may include, even if downlink reception or uplink transmission, which is configured to be performed repeatedly, overlaps with an inactive time according to the first DRX configuration, performing the overlapping downlink reception or uplink transmission.

In each aspect of the present disclosure, the method of the UE or operations may include: receiving a configuration related to a network energy saving mode; and based on downlink reception or uplink transmission, which is configured to be performed repeatedly, overlapping with a time period for the network energy saving mode, skipping the overlapping downlink reception or uplink transmission.

In each aspect of the present disclosure, the method of the UE or operations may include: receiving a configuration related to a network energy saving mode; and based on downlink reception or uplink transmission, which overlaps with a time period for the network energy saving mode, being scheduled by a DCI format, performing the overlapping downlink reception or uplink transmission.

In each aspect of the present disclosure, the method of the BS or operations may include, even if downlink transmission or uplink reception, which is configured to be performed repeatedly, overlaps with an inactive time according to the first DRX configuration, performing the overlapping downlink transmission or uplink reception.

In each aspect of the present disclosure, the method of the BS or operations may include: transmitting a configuration related to a network energy saving mode; and based on downlink transmission or uplink reception, which is configured to be performed repeatedly, overlapping with a time period for the network energy saving mode, skipping the overlapping downlink transmission or uplink reception.

In each aspect of the present disclosure, the method of the BS or operations may include: transmitting a configuration related to a network energy saving mode; and based on downlink transmission or uplink reception, which overlaps with a time period for the network energy saving mode, being scheduled by a DCI format, performing the overlapping downlink transmission or uplink reception.

The foregoing solutions are merely a part of the examples of the present disclosure and various examples into which the technical features of the present disclosure are incorporated may be derived and understood by persons skilled in the art from the following detailed description.

### Advantageous Effects

According to implementation(s) of the present disclosure, energy saving methods and procedures for a network, base station (BS), and/or user equipment (UE) may be provided.

According to implementation(s) of the present disclosure, methods and procedures for transmitting a downlink signal may be provided to enable energy saving for a network, BS, and/or UE.

The effects according to the present disclosure are not limited to what has been particularly described hereinabove and other effects not described herein will be more clearly understood by persons skilled in the art related to the present disclosure from the following detailed description.

### BRIEF DESCRIPTION OF THE DRAWINGS

The accompanying drawings, which are included to provide a further understanding of the present disclosure, illustrate examples of implementations of the present disclosure and together with the detailed description serve to explain implementations of the present disclosure:
FIG. 1 illustrates an example of a communication system 1 to which implementations of the present disclosure are applied;
FIG. 2 is a block diagram illustrating examples of communication devices capable of performing a method according to the present disclosure;
FIG. 3 illustrates another example of a wireless device capable of performing implementation(s) of the present disclosure;
FIG. 4 illustrates an example of a frame structure used in a 3rd generation partnership project (3GPP)-based wireless communication system;
FIG. 5 illustrates a resource grid of a slot;
FIG. 6 illustrates physical channels and a signal transmission/reception procedure using the physical channels in a 3rd generation partnership project based (3GPP-based) communication system as an exemplary wireless communication system;
FIG. 7 illustrates a system information (SI) acquisition procedure;
FIG. 8 illustrates random access procedures applicable to implementation(s) of the present disclosure;
FIG. 9 illustrates an example of physical downlink shared channel (PDSCH) time domain resource assignment (TDRA) by a physical downlink control channel (PDCCH) and an example of physical uplink shared channel (PUSCH) TDRA by the PDCCH;
FIG. 10 illustrates SSB and CORESET multiplexing patterns;
FIG. 11 illustrates a discontinuous reception (DRX) operation applicable to implementation(s) of the present disclosure;
FIG. 12 illustrates a case in which a long DRX cycle and a short DRX cycle are configured;
FIGS. 13 and 14 illustrate energy saving methods according to some implementations of the present disclosure;
FIG. 15 illustrates a flow of downlink (DL) signal reception by a user equipment (UE) according to some implementations of the present disclosure; and
FIG. 16 illustrates a flow of DL signal transmission by a base station (BS) according to some implementations of the present disclosure.

### DETAILED DESCRIPTION

Hereinafter, implementations according to the present disclosure will be described in detail with reference to the accompanying drawings. The detailed description, which will be given below with reference to the accompanying drawings, is intended to explain exemplary implementations of the present disclosure, rather than to show the only implementations that may be implemented according to the present disclosure. The following detailed description includes specific details in order to provide a thorough understanding of the present disclosure. However, it will be apparent to those skilled in the art that the present disclosure may be practiced without such specific details.

In some instances, known structures and devices may be omitted or may be shown in block diagram form, focusing on important features of the structures and devices, so as not to obscure the concept of the present disclosure. The same reference numbers will be used throughout the present disclosure to refer to the same or like parts.

A technique, a device, and a system described below may be applied to a variety of wireless multiple access systems. The multiple access systems may include, for example, a code division multiple access (CDMA) system, a frequency division multiple access (FDMA) system, a time division multiple access (TDMA) system, an orthogonal frequency division multiple access (OFDMA) system, a single-carrier frequency division multiple access (SC-FDMA) system, a multi-carrier frequency division multiple access (MC-FDMA) system, etc. CDMA may be implemented by radio technology such as universal terrestrial radio access (UTRA) or CDMA2000. TDMA may be implemented by radio technology such as global system for mobile communications (GSM), general packet radio service (GPRS), enhanced data rates for GSM evolution (EDGE) (i.e., GERAN), etc. OFDMA may be implemented by radio technology such as institute of electrical and electronics engineers (IEEE) 802.11 (Wi-Fi), IEEE 802.16 (WiMAX), IEEE 802.20, evolved-UTRA (E-UTRA), etc. UTRA is part of universal mobile telecommunications system (UMTS) and 3rd generation partnership project (3GPP) long-term evolution (LTE) is part of E-UMTS using E-UTRA. 3GPP LTE adopts OFDMA on downlink (DL) and adopts SC-FDMA on uplink (UL). LTE-advanced (LTE-A) is an evolved version of 3GPP LTE.

For convenience of description, description will be given under the assumption that the present disclosure is applied to LTE and/or new RAT (NR). However, the technical features of the present disclosure are not limited thereto. For example, although the following detailed description is given based on mobile communication systems corresponding to 3GPP LTE/NR systems, the mobile communication systems are applicable to other arbitrary mobile communication systems except for matters that are specific to the 3GPP LTE/NR system.

For terms and techniques that are not described in detail among terms and techniques used in the present disclosure, reference may be made to 3GPP based standard specifications, for example, 3GPP TS 36.211, 3GPP TS 36.212, 3GPP TS 36.213, 3GPP TS 36.321, 3GPP TS 36.300, 3GPP TS 36.331, 3GPP TS 37.213, 3GPP TS 38.211, 3GPP TS 38.212, 3GPP TS 38.213, 3GPP TS 38.214, 3GPP TS 38.300, 3GPP TS 38.304, 3GPP TS 38.331, etc.

In examples of the present disclosure described later, if a device "assumes" something, this may mean that a channel transmission entity transmits a channel in compliance with the corresponding "assumption". This also may mean that a channel reception entity receives or decodes the channel in the form of conforming to the "assumption" on the premise that the channel has been transmitted in compliance with the "assumption".

In the present disclosure, a user equipment (UE) may be fixed or mobile. Each of various devices that transmit and/or receive user data and/or control information by communicating with a base station (BS) may be the UE. The term UE may be referred to as terminal equipment, mobile station (MS), mobile terminal (MT), user terminal (UT), subscriber station (SS), wireless device, personal digital assistant (PDA), wireless modem, handheld device, etc. In the present disclosure, a BS refers to a fixed station that communicates with a UE and/or another BS and exchanges data and control information with a UE and another BS. The term BS may be referred to as advanced base station (ABS), Node-B (NB), evolved Node-B (eNB), base transceiver system (BTS), access point (AP), processing server (PS), etc. Particularly, a BS of a universal terrestrial radio access (UTRAN) is referred to as an NB, a BS of an evolved-UTRAN (E-UTRAN) is referred to as an eNB, and a BS of new radio access technology network is referred to as a gNB. Hereinbelow, for convenience of description, the NB, eNB, or gNB will be referred to as a BS regardless of the type or version of communication technology.

In the present disclosure, a node refers to a fixed point capable of transmitting/receiving a radio signal to/from a UE by communication with the UE. Various types of BSs may be used as nodes regardless of the names thereof. For example, a BS, NB, eNB, pico-cell eNB (PeNB), home eNB (HeNB), relay, repeater, etc. may be a node. Furthermore, a node may not be a BS. For example, a radio remote head (RRH) or a radio remote unit (RRU) may be a node. Generally, the RRH and RRU have power levels lower than that of the BS. Since the RRH or RRU (hereinafter, RRH/RRU) is connected to the BS through a dedicated line such as an optical cable in general, cooperative communication according to the RRH/RRU and the BS may be smoothly performed relative to cooperative communication according to BSs connected through a wireless link. At least one antenna is installed per node. An antenna may refer to a physical antenna port or refer to a virtual antenna or an antenna group. The node may also be called a point.

In the present disclosure, a cell refers to a specific geographical area in which one or more nodes provide communication services. Accordingly, in the present disclosure, communication with a specific cell may mean communication with a BS or a node providing communication services to the specific cell. A DL/UL signal of the specific cell refers to a DL/UL signal from/to the BS or the node providing communication services to the specific cell. A cell providing UL/DL communication services to a UE is especially called a serving cell. Furthermore, channel status/quality of the specific cell refers to channel status/quality of a channel or a communication link generated between the BS or the node providing communication services to the specific cell and the UE. In 3GPP-based communication systems, the UE may measure a DL channel state from a specific node using cell-specific reference signal(s) (CRS(s)) transmitted on a CRS resource and/or channel state information reference signal(s) (CSI-RS(s)) transmitted on a CSI-RS resource, allocated to the specific node by antenna port(s) of the specific node.

A 3GPP-based communication system uses the concept of a cell in order to manage radio resources, and a cell related with the radio resources is distinguished from a cell of a geographic area.

The "cell" of the geographic area may be understood as coverage within which a node may provide services using a carrier, and the "cell" of the radio resources is associated with bandwidth (BW), which is a frequency range configured by the carrier. Since DL coverage, which is a range within which the node is capable of transmitting a valid signal, and UL coverage, which is a range within which the node is capable of receiving the valid signal from the UE, depend upon a carrier carrying the signal, coverage of the node may also be associated with coverage of the "cell" of radio resources used by the node. Accordingly, the term "cell" may be used to indicate service coverage by the node sometimes, radio resources at other times, or a range that a signal using the radio resources may reach with valid strength at other times.

In 3GPP communication standards, the concept of the cell is used in order to manage radio resources. The "cell" associated with the radio resources is defined by a combination of DL resources and UL resources, that is, a combination of a DL component carrier (CC) and a UL CC. The cell may be configured by the DL resources only or by the combination of the DL resources and the UL resources. If carrier aggregation is supported, linkage between a carrier frequency of the DL resources (or DL CC) and a carrier frequency of the UL resources (or UL CC) may be indicated by system information. For example, the combination of the DL resources and the UL resources may be indicated by system information block type 2 (SIB2) linkage. In this case, the carrier frequency may be equal to or different from a center frequency of each cell or CC. When carrier aggregation (CA) is configured, the UE has only one radio resource control (RRC) connection with a network. During RRC connection establishment/re-establishment/handover, one serving cell provides non-access stratum (NAS) mobility information. During RRC connection re-establishment/handover, one serving cell provides security input. This cell is referred to as a primary cell (Pcell). The Pcell refers to a cell operating on a primary frequency on which the UE performs an initial connection establishment procedure or initiates a connection re-establishment procedure. According to UE capability, secondary cells (Scells) may be configured to form a set of serving cells together with the Pcell. The Scell may be configured after completion of RRC connection establishment and used to provide additional radio resources in addition to resources of a specific cell (SpCell). A carrier corresponding to the Pcell on DL is referred to as a downlink primary CC (DL PCC), and a carrier corresponding to the Pcell on UL is referred to as an uplink primary CC (UL PCC). A carrier corresponding to the Scell on DL is referred to as a downlink secondary CC (DL SCC), and a carrier corresponding to the Scell on UL is referred to as an uplink secondary CC (UL SCC).

In a dual connectivity (DC) operation, the term special cell (SpCell) refers to a Pcell of a master cell group (MCG) or a primary secondary cell (PSCell) of a secondary cell group (SCG). The SpCell supports PUCCH transmission and contention-based random access and is always activated. The MCG is a group of service cells associated with a master node (e.g., BS) and includes the SpCell (Pcell) and optionally one or more Scells. For a UE configured with DC, the SCG is a subset of serving cells associated with a secondary node and includes the PSCell and 0 or more Scells. The PSCell is a primary Scell of the SCG. For a UE in RRC_CONNECTED state, which is not configured with CA or DC, only one serving cell including only the Pcell is present. For a UE in RRC_CONNECTED state, which is configured with CA or DC, the term serving cells refers to a set of cells including SpCell(s) and all Scell(s). In DC, two medium access control (MAC) entities, i.e., one MAC entity for the MCG and one MAC entity for the SCG, are configured for the UE.

For a UE that is configured with CA and is not configured with DC, a Pcell PUCCH group (also called a primary PUCCH group) including the Pcell and 0 or more Scells and an Scell PUCCH group (also called a secondary PUCCH group) including only Scell(s) may be configured. For the Scell, an Scell on which a PUCCH associated with the corresponding cell is transmitted (hereinafter, a PUCCH Scell) may be configured. An Scell for which a PUCCH Scell is indicated belongs to the Scell PUCCH group (i.e., the secondary PUCCH group) and PUCCH transmission of related uplink control information (UCI) is performed on the PUCCH Scell. If a PUCCH Scell is not indicated for an Scell or a cell which is indicated for PUCCH transmission for the Scell is a Pcell, the Scell belongs to the Pcell PUCCH group (i.e., the primary PUCCH group) and PUCCH transmission of related UCI is performed on the Pcell. Hereinbelow, if the UE is configured with the SCG and some implementations of the present disclosure related to a PUCCH are applied to the SCG, the primary cell may refer to the PSCell of the SCG. If the UE is configured with the PUCCH Scell and some implementations of the present disclosure related to the PUCCH are applied to the secondary PUCCH group, the primary cell may refer to the PUCCH Scell of the secondary PUCCH group.

In a wireless communication system, the UE receives information on DL from the BS and the UE transmits information on UL to the BS. The information that the BS and UE transmit and/or receive includes data and a variety of control information and there are various physical channels according to types/usage of the information that the UE and the BS transmit and/or receive.

The 3GPP-based communication standards define DL physical channels corresponding to resource elements carrying information originating from a higher layer and DL physical signals corresponding to resource elements which are used by the physical layer but do not carry the information originating from the higher layer. For example, a physical downlink shared channel (PDSCH), a physical broadcast channel (PBCH), a physical multicast channel (PMCH), a physical control format indicator channel (PCFICH), a physical downlink control channel (PDCCH), etc. are defined as the DL physical channels, and a reference signal (RS) and a synchronization signal are defined as the DL physical signals. The RS, which is also referred to as a pilot, represents a signal with a predefined special waveform known to both the BS and the UE. For example, a demodulation reference signal (DMRS), a channel state information RS (CSI-RS), a positioning reference signal (PRS) and etc. are defined as DL RSs. The 3GPP-based communication standards define UL physical channels corresponding to resource elements carrying information originating from the higher layer and UL physical signals corresponding to resource elements which are used by the physical layer but do not carry the information originating from the higher layer. For example, a physical uplink shared channel (PUSCH), a physical uplink control channel (PUCCH), and a physical random access channel (PRACH) are defined as the UL physical channels, and a DMRS for a UL control/data signal, a sounding reference signal (SRS) used for UL channel measurement, etc. are defined.

In the present disclosure, a PDCCH refers to a set of time-frequency resources (e.g., resource elements (REs)) carrying downlink control information (DCI), and a PDSCH refers to a set of time-frequency resources carrying DL data. A PUCCH, a PUSCH, and a PRACH refer to a set of time-frequency resources carrying UCI, a set of time-frequency resources carrying UL data, and a set of time-frequency resources carrying random access signals, respectively. In the following description, "the UE transmits/receives a PUCCH/PUSCH/PRACH" is used as the same meaning that the UE transmits/receives the UCI/UL data/random access signals on or through the PUCCH/PUSCH/PRACH, respectively. In addition, "the BS transmits/receives a PBCH/PDCCH/PDSCH" is used as the same meaning that the BS transmits the broadcast information/DCI/DL data on or through a PBCH/PDCCH/PDSCH, respectively.

In this specification, a radio resource (e.g., a time-frequency resource) scheduled or configured to the UE by the BS for transmission or reception of the PUCCH/PUSCH/PDSCH may be referred to as a PUCCH/PUSCH/PDSCH resource.

Since a communication device receives a synchronization signal (SS), DMRS, CSI-RS, PRS, PBCH, PDCCH, PDSCH, PUSCH, and/or PUCCH in the form of radio signals on a cell, the communication device may not select and receive radio signals including only a specific physical channel or a specific physical signal through a radio frequency (RF) receiver, or may not select and receive radio signals without a specific physical channel or a specific physical signal through the RF receiver. In actual operations, the communication device receives radio signals on the cell via the RF receiver, converts the radio signals, which are RF band signals, into baseband signals, and then decodes physical signals and/or physical channels in the baseband signals using one or more processors. Thus, in some implementations of the present disclosure, not receiving physical signals and/or physical channels may mean that a communication device does not attempt to restore the physical signals and/or physical channels from radio signals, for example, does not attempt to decode the physical signals and/or physical channels, rather than that the communication device does not actually receive the radio signals including the corresponding physical signals and/or physical channels.

As more and more communication devices have required greater communication capacity, there has been a need for eMBB communication relative to legacy radio access technology (RAT). In addition, massive MTC for providing various services at anytime and anywhere by connecting a plurality of devices and objects to each other is one main issue to be considered in next-generation communication. Further, communication system design considering services/UEs sensitive to reliability and latency is also under discussion. The introduction of next-generation RAT is being discussed in consideration of eMBB communication, massive MTC, ultra-reliable and low-latency communication (URLLC), and the like. Currently, in 3GPP, a study on the next-generation mobile communication systems after EPC is being conducted. In the present disclosure, for convenience, the corresponding technology is referred to a new RAT (NR) or fifth-generation (5G) RAT, and a system using NR or supporting NR is referred to as an NR system.

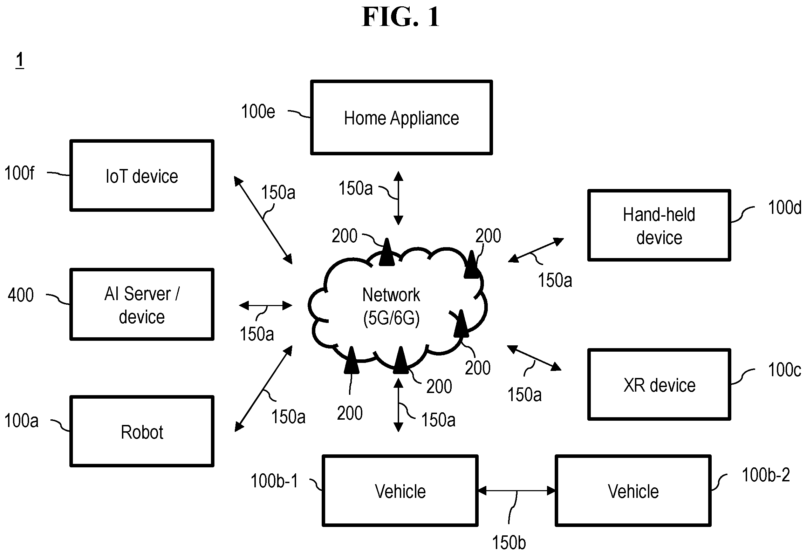

FIG. 1 illustrates an example of a communication system 1 to which implementations of the present disclosure are applied. Referring to FIG. 1, the communication system 1 applied to the present disclosure includes wireless devices, BSs, and a network. Here, the wireless devices represent devices performing communication using RAT (e.g., 5G NR or LTE (e.g., E-UTRA)) and may be referred to as communication/radio/5G devices. The wireless devices may include, without being limited to, a robot 100a, vehicles 100b-1 and 100b-2, an extended reality (XR) device 100c, a hand-held device 100d, a home appliance 100e, an Internet of Things (IoT) device 100f, and an artificial intelligence (AI) device/server 400. For example, the vehicles may include a vehicle having a wireless communication function, an autonomous driving vehicle, and a vehicle capable of performing vehicle-to-vehicle communication. Here, the vehicles may include an unmanned aerial vehicle (UAV) (e.g., a drone). The XR device may include an augmented reality (AR)/virtual reality (VR)/mixed reality (MR) device and may be implemented in the form of a head-mounted device (HMD), a head-up display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or smartglasses), and a computer (e.g., a notebook). The home appliance may include a TV, a refrigerator, and a washing machine. The IoT device may include a sensor and a smartmeter. For example, the BSs and the network may also be implemented as wireless devices and a specific wireless may operate as a BS/network node with respect to another wireless device.

The wireless devices 100a to 100f may be connected to a network 300 via BSs 200. AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g., vehicle-to-vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a and 150b may be established between the wireless devices 100a to 100f and the BSs 200 and between the wireless devices 100a to 100f). Here, the wireless communication/connections such as UL/DL communication 150a and sidelink communication 150b (or, device-to-device (D2D) communication) may be established by various RATs (e.g., 5G NR). The wireless devices and the BSs/wireless devices may transmit/receive radio signals to/from each other through the wireless communication/connections 150a and 150b. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

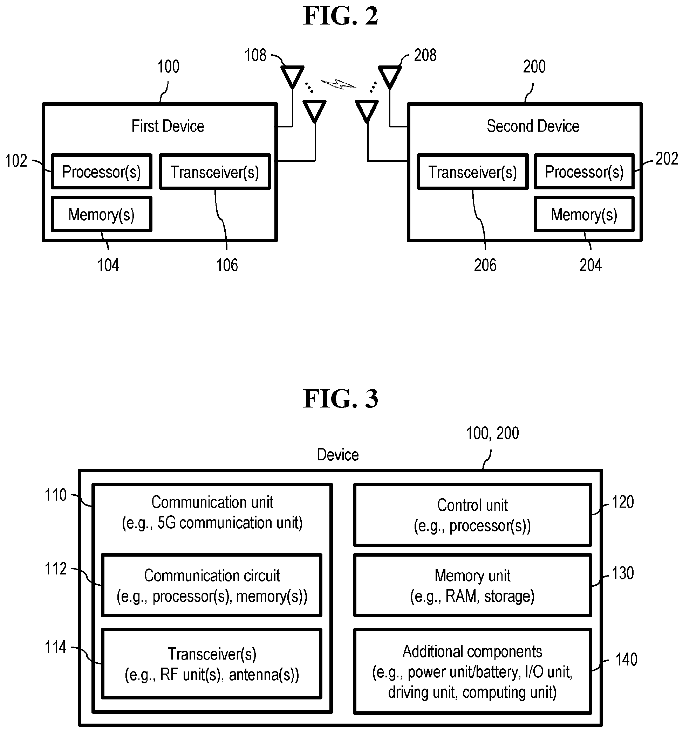

FIG. 2 is a block diagram illustrating examples of communication devices capable of performing a method according to the present disclosure. Referring to FIG. 2, a first wireless device 100 and a second wireless device 200 may transmit and/or receive radio signals through a variety of RATs (e.g., LTE and NR). Here, {the first wireless device 100 and the second wireless device 200} may correspond to {the wireless device 100x and the BS 200} and/or {the wireless device 100x and the wireless device 100x} of FIG. 1.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the below-described /proposed functions, procedures, and/or methods. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver(s) 106 and then store information obtained by processing the second information/signals in the memory(s) 104. The memory(s) 104 may be connected to the processor(s) 102 and may store a variety of information related to operations of the processor(s) 102. For example, the memory(s) 104 may perform a part or all of processes controlled by the processor(s) 102 or store software code including instructions for performing the below-described/proposed procedures and/or methods. Here, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 is used interchangeably with radio frequency (RF) unit(s). In the present disclosure, the wireless device may represent the communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the below-described/proposed functions, procedures, and/or methods. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may perform a part or all of processes controlled by the processor(s) 202 or store software code including instructions for performing the below-described/proposed procedures and/or methods. Here, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 is used interchangeably with RF unit(s). In the present disclosure, the wireless device may represent the communication modem/circuit/chip.

The wireless communication technology implemented in the wireless devices 100 and 200 of the present disclosure may include narrowband Internet of things for low-power communication as well as LTE, NR, and 6G. For example, the NB-IoT technology may be an example of low-power wide-area network (LPWAN) technologies and implemented in standards such as LTE Cat NB1 and/or LTE Cat NB2. However, the NB-IoT technology is not limited to the above names. Additionally or alternatively, the wireless communication technology implemented in the wireless devices XXX and YYY of the present disclosure may perform communication based on the LTE-M technology. For example, the LTE-M technology may be an example of LPWAN technologies and called by various names including enhanced machine type communication (eMTC). For example, the LTE-M technology may be implemented in at least one of the following various standards: 1) LTE CAT 0, 2) LTE Cat M1, 3) LTE Cat M2, 4) LTE non-Bandwidth Limited (non-BL), 5) LTE-MTC, 6) LTE Machine Type Communication, and/or 7) LTE M, etc., but the LTE-M technology is not limited to the above names. Additionally or alternatively, the wireless communication technology implemented in the wireless devices XXX and YYY of the present disclosure may include at least one of ZigBee, Bluetooth, and LPWAN in consideration of low-power communication, but the wireless communication technology is not limited to the above names. For example, the ZigBee technology may create a personal area network (PAN) related to small/low-power digital communication based on various standards such as IEEE 802.15.4 and so on, and the ZigBee technology may be called by various names.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as a physical (PHY) layer, medium access control (MAC) layer, a radio link control (RLC) layer, a packet data convergence protocol (PDCP) layer, radio resource control (RRC) layer, and a service data adaptation protocol (SDAP) layer). The one or more processors 102 and 202 may generate one or more protocol data units (PDUs) and/or one or more service data units (SDUs) according to the functions, procedures, proposals, and/or methods disclosed in the present disclosure. The one or more processors 102 and 202 may generate messages, control information, data, or information according to the functions, procedures, proposals, and/or methods disclosed in the present disclosure. The one or more processors 102 and 202 may generate signals (e.g., baseband signals) including PDUs, SDUs, messages, control information, data, or information according to the functions, procedures, proposals, and/or methods disclosed in the present disclosure and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the functions, procedures, proposals, and/or methods disclosed in the present disclosure.

The one or more processors 102 and 202 may be referred to as controllers, microcontrollers, microprocessors, or microcomputers. The one or more processors 102 and 202 may be implemented by hardware, firmware, software, or a combination thereof. As an example, one or more application specific integrated circuits (ASICs), one or more digital signal processors (DSPs), one or more digital signal processing devices (DSPDs), one or more programmable logic devices (PLDs), or one or more field programmable gate arrays (FPGAs) may be included in the one or more processors 102 and 202. The functions, procedures, proposals, and/or methods disclosed in the present disclosure may be implemented using firmware or software, and the firmware or software may be configured to include the modules, procedures, or functions. Firmware or software configured to perform the functions, procedures, proposals, and/or methods disclosed in the present disclosure may be included in the one or more processors 102 and 202 or stored in the one or more memories 104 and 204 so as to be driven by the one or more processors 102 and 202. The functions, procedures, proposals, and/or methods disclosed in the present disclosure may be implemented using firmware or software in the form of code, commands, and/or a set of commands.

The one or more memories 104 and 204 may be connected to the one or more processors 102 and 202 and store various types of data, signals, messages, information, programs, code, commands, and/or instructions. The one or more memories 104 and 204 may be configured by read-only memories (ROMs), random access memories (RAMs), electrically erasable programmable read-only memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of the present disclosure, to one or more other devices. The one or more transceivers 106 and 206 may receive user data, control information, and/or radio signals/channels, mentioned in the functions, procedures, proposals, methods, and/or operational flowcharts disclosed in the present disclosure, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208. The one or more transceivers 106 and 206 may be configured to transmit and receive user data, control information, and/or radio signals/channels, mentioned in the functions, procedures, proposals, methods, and/or operational flowcharts disclosed in the present disclosure, through the one or more antennas 108 and 208. In the present disclosure, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

FIG. 3 illustrates another example of a wireless device capable of performing implementation(s) of the present disclosure. Referring to FIG. 3, wireless devices 100 and 200 may correspond to the wireless devices 100 and 200 of FIG. 2 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 2. For example, the transceiver(s) 114 may include the one or more transceivers 106 and 206 and/or the one or more antennas 108 and 208 of FIG. 2. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 1), the vehicles (100b-1 and 100b-2 of FIG. 1), the XR device (100c of FIG. 1), the hand-held device (100d of FIG. 1), the home appliance (100e of FIG. 1), the IoT device (100f of FIG. 1), a digital broadcast UE, a hologram device, a public safety device, an MTC device, a medicine device, a fintech device (or a finance device), a security device, a climate/environment device, the AI server/device (400 of FIG. 1), the BS (200 of FIG. 1), a network node, etc. The wireless device may be used in a mobile or fixed place according to a use-case/service.

In FIG. 3, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an electronic control unit (ECU), a graphical processing unit, and a memory control processor. As another example, the memory 130 may be configured by a random access memory (RAM), a dynamic RAM (DRAM), a read-only memory (ROM)), a flash memory, a transitory memory, a non-transitory memory, and/or a combination thereof.

In the present disclosure, the at least one memory (e.g., 104 or 204) may store instructions or programs, and the instructions or programs may cause, when executed, at least one processor operably connected to the at least one memory to perform operations according to some embodiments or implementations of the present disclosure.

In the present disclosure, a computer readable (non-transitory) storage medium may store at least one instruction or program, and the at least one instruction or program may cause, when executed by at least one processor, the at least one processor to perform operations according to some embodiments or implementations of the present disclosure.

In the present disclosure, a processing device or apparatus may include at least one processor, and at least one computer memory operably connected to the at least one processor. The at least one computer memory may store instructions or programs, and the instructions or programs may cause, when executed, the at least one processor operably connected to the at least one memory to perform operations according to some embodiments or implementations of the present disclosure.

In the present disclosure, a computer program may include program code stored on at least one computer-readable (non-transitory) storage medium and, when executed, configured to perform operations according to some implementations of the present disclosure or cause at least one processor to perform the operations according to some implementations of the present disclosure. The computer program may be provided in the form of a computer program product. The computer program product may include at least one computer-readable (non-transitory) storage medium.

A communication device of the present disclosure includes at least one processor; and at least one computer memory operably connected to the at least one processor and configured to store instructions for causing, when executed, the at least one processor to perform operations according to example(s) of the present disclosure described later.

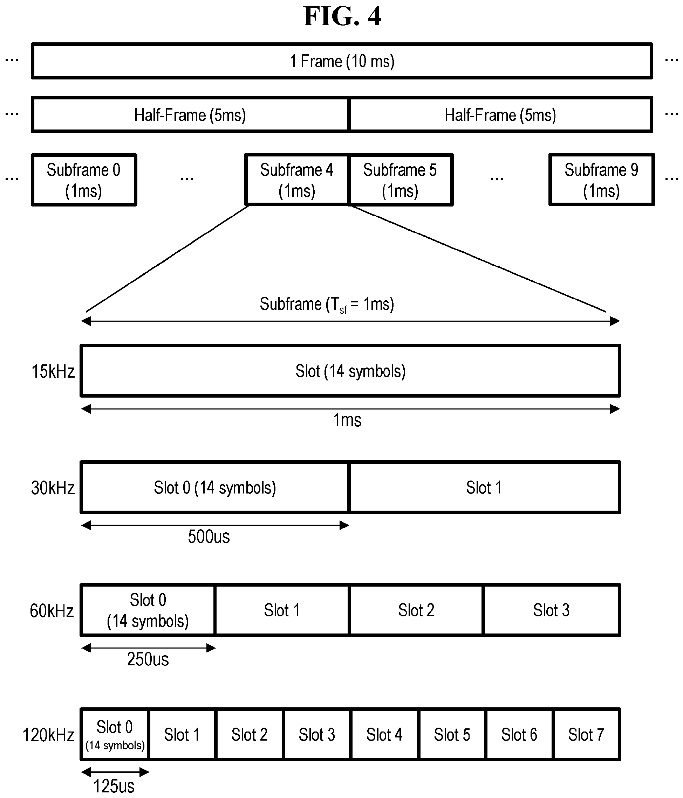

FIG. 4 illustrates an example of a frame structure used in a 3GPP-based wireless communication system.

The frame structure of FIG. 4 is purely exemplary and the number of subframes, the number of slots, and the number of symbols, in a frame, may be variously changed. In an NR system, different OFDM numerologies (e.g., subcarrier spacings (SCSs)) may be configured for multiple cells which are aggregated for one UE. Accordingly, the (absolute time) duration of a time resource including the same number of symbols (e.g., a subframe, a slot, or a transmission time interval (TTI)) may be differently configured for the aggregated cells. Here, the symbol may include an OFDM symbol (or cyclic prefix - OFDM (CP-OFDM) symbol) and an SC-FDMA symbol (or discrete Fourier transform-spread-OFDM (DFT-s-OFDM) symbol). In the present disclosure, the symbol, the OFDM-based symbol, the OFDM symbol, the CP-OFDM symbol, and the DFT-s-OFDM symbol are used interchangeably.

Referring to FIG. 4, in the NR system, UL and DL transmissions are organized into frames. Each frame has a duration of T_{f}= (△fₘₐₓ*N_{f}/100)*T_{c} = 10 ms and is divided into two half-frames of 5 ms each. A basic time unit for NR is T_{c} = 1/(△fₘₐₓ*N_{f}) where △fₘₐₓ = 480*10³ Hz and N_{f}= 4096. For reference, a basic time unit for LTE is Tₛ = 1/(△f_{ref}*N_{f,ref}) where △f_{ref} = 15*10³ Hz and N_{f,ref}= 2048. T_{c} and T_{f} have the relationship of a constant κ = T_{c}/T_{f} = 64. Each half-frame includes 5 subframes and a duration T_{sf} of a single subframe is 1 ms. Subframes are further divided into slots and the number of slots in a subframe depends on a subcarrier spacing. Each slot includes 14 or 12 OFDM symbols based on a cyclic prefix. In a normal CP, each slot includes 14 OFDM symbols and, in an extended CP, each slot includes 12 OFDM symbols. The numerology depends on an exponentially scalable subcarrier spacing △f = 2^{u}*15 kHz. The table below shows the number of OFDM symbols (*N*^{slot}_{symb}) per slot, the number of slots (*N*^{frame,u}ₛₗₒₜ) per frame, and the number of slots (*N*^{subframe,u}ₛₗₒₜ) per subframe.

**Table 1**

| *u* | *N*^{slot}_{symb} | *N*^{frame,u}ₛₗₒₜ | *N*^{subframe,u}ₛₗₒₜ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

The table below shows the number of OFDM symbols per slot, the number of slots per frame, and the number of slots per subframe, according to the subcarrier spacing △f = 2^{u}*15 kHz.

**Table 2**

| *u* | *N*^{slot}_{symb} | *N*^{frame,u}ₛₗₒₜ | *N*^{subframe,u}ₛₗₒₜ |
|---|---|---|---|
| 2 | 12 | 40 | 4 |

For a subcarrier spacing configuration u, slots may be indexed within a subframe in ascending order as follows: n^{u}ₛ ∈ {0, ..., n^{subframe,u}ₛₗₒₜ - 1} and indexed within a frame in ascending order as follows: n^{u}_{s,f} ∈ {0, ..., n^{frame,u}ₛₗₒₜ - 1}.

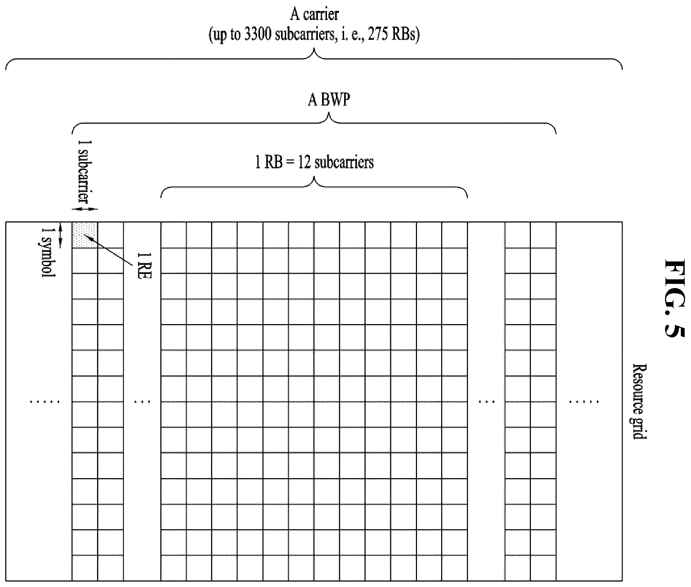

FIG. 5 illustrates a resource grid of a slot. The slot includes multiple (e.g., 14 or 12) symbols in the time domain. For each numerology (e.g., subcarrier spacing) and carrier, a resource grid of *N*^{size,u}_{grid,x}**N*^{RB}_{sc} subcarriers and *N*^{subframe,u}_{symb} OFDM symbols is defined, starting at a common resource block (CRB) N^{start,u}_{grid} indicated by higher layer signaling (e.g. RRC signaling), where *N*^{size,u}_{grid,x} is the number of resource blocks (RBs) in the resource grid and the subscript x is DL for downlink and UL for uplink. *N*^{RB}_{sc} is the number of subcarriers per RB. In the 3GPP-based wireless communication system, *N*^{RB}_{sc} is typically 12. There is one resource grid for a given antenna port *p*, a subcarrier spacing configuration *u,* and a transmission link (DL or UL). The carrier bandwidth *N*^{size,u}_{grid} for the subcarrier spacing configuration *u* is given to the UE by a higher layer parameter (e.g., RRC parameter). Each element in the resource grid for the antenna port *p* and the subcarrier spacing configuration *u* is referred to as a resource element (RE) and one complex symbol may be mapped to each RE. Each RE in the resource grid is uniquely identified by an index *k* in the frequency domain and an index *l* representing a symbol location relative to a reference point in the time domain. In the NR system, an RB is defined by 12 consecutive subcarriers in the frequency domain. In the NR system, RBs are classified into CRBs and physical resource blocks (PRBs). The CRBs are numbered from 0 upwards in the frequency domain for the subcarrier spacing configuration *u.* The center of subcarrier 0 of CRB 0 for the subcarrier spacing configuration *u* is equal to 'Point A' which serves as a common reference point for RB grids. The PRBs for subcarrier spacing configuration *u* are defined within a bandwidth part (BWP) and numbered from 0 to *N*^{size,u}_{BWP,i}-1, where i is a number of the BWP. The relation between a PRB n_{PRB} in a BWP i and a CRB n^{u}_{CRB} is given by: n^{u}_{PRB} = n^{u}_{CRB} + *N*^{size,u}_{BWP,i}, where *N*^{size}_{BWP,i} is a CRB in which the BWP starts relative to CRB 0. The BWP includes a plurality of consecutive RBs in the frequency domain. For example, the BWP may be a subset of contiguous CRBs defined for a given numerology uᵢ in the BWP i on a given carrier. A carrier may include a maximum of N (e.g., 5) BWPs. The UE may be configured to have one or more BWPs on a given component carrier. Data communication is performed through an activated BWP and only a predetermined number of BWPs (e.g., one BWP) among BWPs configured for the UE may be active on the component carrier.

For each serving cell in a set of DL BWPs or UL BWPs, the network may configure at least an initial DL BWP and one (if the serving cell is configured with uplink) or two (if supplementary uplink is used) initial UL BWPs. The network may configure additional UL and DL BWPs. For each DL BWP or UL BWP, the UE may be provided the following parameters for the serving cell: i) an SCS; ii) a CP; iii) a CRB *N*^{start}_{BWP} = *O*_{carrier} + *RB*ₛₜₐᵣₜ and the number of contiguous RBs *N*^{size}_{BWP} = L_{RB} provided by an RRC parameter *locationAndBandwidth*, which indicates an offset *RB*ₛₑₜ and a length *L*_{RB} as a resource indicator value (RIV) on the assumption of *N*^{start}_{BWP} = 275, and a value *O*_{carrier} provided by an RRC parameter *offsetToCarrier* for the SCS; an index in the set of DL BWPs or UL BWPs; a set of BWP-common parameters; and a set of BWP-dedicated parameters.

Switching between configured BWPs may occur using RRC signaling, DCI, and/or an inactivity timer or during the initiation of random access. If the inactivity timer is configured for the serving cell, the expiration of the inactivity timer associated with the serving cell switches an active BWP to a default BWP configured by the network.

Virtual resource blocks (VRBs) may be defined within the BWP and indexed from 0 to *N*^{size,u}_{BWP,i}-1, where i denotes a BWP number. The VRBs may be mapped to PRBs according to interleaved mapping or non-interleaved mapping. In some implementations, VRB n may be mapped to PRB n for non-interleaved VRB-to-PRB mapping.

NR frequency bands are defined as two types of frequency ranges, i.e., FR1 and FR2. FR2 is also referred to as millimeter wave (mmW). The following table shows frequency ranges within which NR may operate.

**Table 3**

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

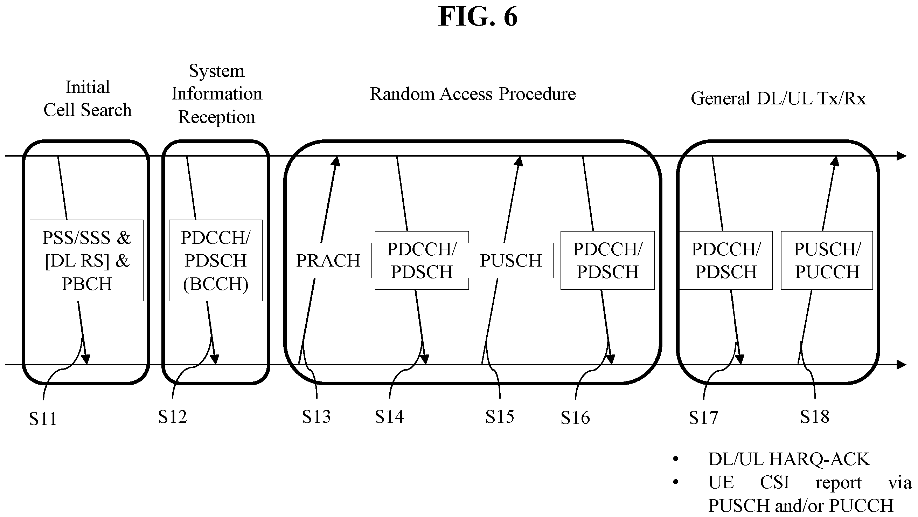

FIG. 6 is a diagram illustrating physical channels and a signal transmission/reception procedure using the physical channels in a 3GPP-based communication system as an exemplary wireless communication system.

When the UE is powered on or when the UE has been disconnected from the wireless communication system, the UE searches for a cell to camp on and performs initial cell search involving synchronization with a BS in the cell (S11). For the initial cell search, the UE receives a synchronization signal block (SSB) (also referred to as a SSB/PBCH block) from the BS. The SSB includes a primary synchronization signal (PSS), a secondary synchronization signal (SSS), and a physical broadcast channel (PBCH). The UE establishes synchronization with the BS based on the PSS/SSS and acquires information such as a cell identity (ID). The UE may acquire broadcast information in a cell based on the PBCH. The UE may receive a DL reference signal (RS) in an initial cell search procedure to monitor a DL channel status.

After initial cell search, the UE may camp on the cell. Subsequently, the UE may monitor a PDCCH in the cell and acquire more specific system information by receiving a PDSCH based on DCI carried on the PDCCH (S12).

Subsequently, to complete connection to the BS, the UE may perform a random access procedure (S13 to S16). In the random access procedure, for example, the UE may transmit a preamble on a PRACH (S13) and receive a PDCCH and a random access response (RAR) for the preamble on a PDSCH corresponding to the PDCCH (S14). When the UE fails in receiving the RAR directed to the UE, the UE may attempt to retransmit the preamble. In the case of contention-based random access, the UE may transmit a PUSCH based on a UL resource assignment included in the RAR (S15), and perform a contention resolution procedure including reception of a PDCCH and a PDSCH corresponding to the PDCCH (S16).

After the above procedure, the UE may receive a PDCCH/PDSCH from the BS (S17) and transmit a PUSCH/PUCCH to the BS (S18) in a general UL/DL signal transmission procedure. Control information that the UE transmits to the BS is generically called uplink control information (UCI). The UCI includes a hybrid automatic repeat and request acknowledgement/negative acknowledgement (HARQ ACK/NACK), a scheduling request (SR), and channel state information (CSI). The CSI includes a channel quality indicator (CQI), a precoding matrix indicator (PMI), and/or a rank indication (RI). In general, UCI is transmitted on the PUCCH. However, when control information and data should be transmitted simultaneously, the control information may be transmitted on the PUSCH. In addition, the UE may transmit the UCI aperiodically on the PUSCH, upon receipt of a request/command from a network.

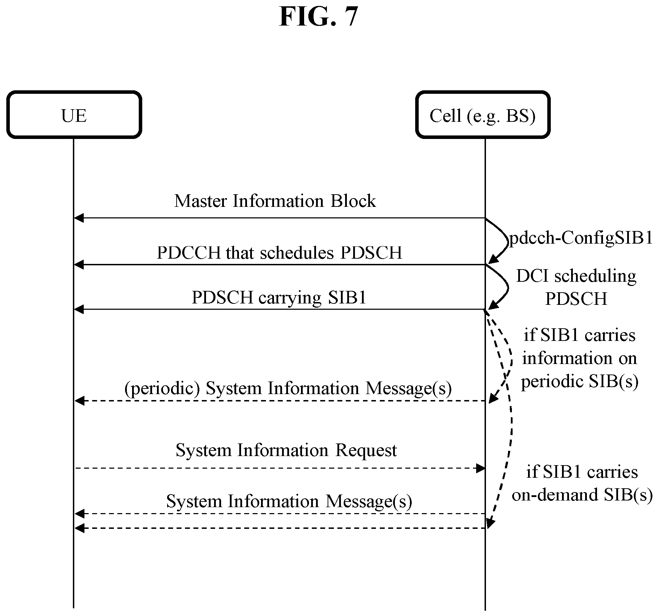

FIG. 7 illustrates a system information (SI) acquisition procedure. The UE may acquire access stratum/non-access stratum (AS/NAS) information from the SI acquisition procedure. The SI acquisition procedure may be applied to UEs in the following states: RRC_IDLE, RRC_INACTIVE, and RRC _CONNECTED. RRC _CONNECTED refers to a state in which the UE has established an RRC connection with the network. RRC_IDLE refers to a state in which the UE is not registered in a specific cell and does not receive AS context and other information from the network. RRC_INACTIVE refers to a state in which the UE remains in a state called CM-CONNECTED where the UE has a signaling connection with the core network for connection management (CM) and is capable of moving within an area defined by the radio access network (RAN) (e.g., BS(s)) without notifying the RAN. CM_CONNECTED refers to a state in which the UE has a NAS signaling connection with the core network. CM_IDLE refers to a state in which the UE has no NAS signaling connection.

In the 3GPP based system, system information (SI) may be classified into a master information block (MIB) and a plurality of system information blocks (SIBs). MIB and a plurality of SIBs are divided into minimum system information (SI) and other SI, where the minimum SI is comprised of MIB and SystemInformationBlock1 (SIB1) and comprises basic information required for initial access and information for acquiring any other SI. SIB1 may be referred to as remaining minimum system information (RMSI). The details may be found in the following.
- The MIB is always transmitted on the BCH with a periodicity of 80 ms and repetitions made within 80 ms. The MIB includes information/parameters related to SIB1 reception and is transmitted through the PBCH in the SSB. During initial cell selection, the UE assumes that a half-frame including SSB(s) is repeated with a periodicity of 20 ms. The UE may determine based on the MIB whether there is a control resource set (CORESET) for a Type0-PDCCH common search space. The Type0-PDCCH common search space is a kind of PDCCH search space and used to transmit a PDCCH that schedules an SI message. When the Type0-PDCCH common search space exists, the UE may determine based on information in the MIB (e.g., pdcch-ConfigSIB1) (i) a plurality of consecutive RBs and one or more consecutive symbols included in a CORESET and (ii) a PDCCH occasion (i.e., a time-domain position for PDCCH reception). When there is no Type0-PDCCH common search space, pdcch-ConfigSIB1 provides information regarding a frequency position where the SSB/SIB1 exists and information regarding a frequency range where the SSB/SIB1 does not exist.
- The SIB1 is transmitted on the downlink shared channel (DL-SCH) with a periodicity of 160 ms and variable transmission repetition periodicity within 160 ms. The default transmission repetition periodicity of SIB1 is 20 ms but the actual transmission repetition periodicity is up to network implementation. SIB1 includes information regarding availability and scheduling (e.g., transmission periodicity and SI-window size) of the remaining SIBs (hereinafter referred to as SIBx, where x is an integer greater than and equal to 2). For example, SIB1 may indicate whether SIBx is periodically broadcast or provided at the request of the UE in an on-demand way. When SIBx is provided in an on-demand way, SIB1 may include information necessary for the UE to perform an SI request. SIB1 is a cell-specific SIB. A PDCCH that schedules SIB1 is transmitted in the Type0-PDCCH common search space, and SIB1 is transmitted through a PDSCH indicated by the PDCCH.
- SIBx is included in the SI message and transmitted through the PDSCH. Each SI message is transmitted within a periodically occurring time window (i.e., SI-window).

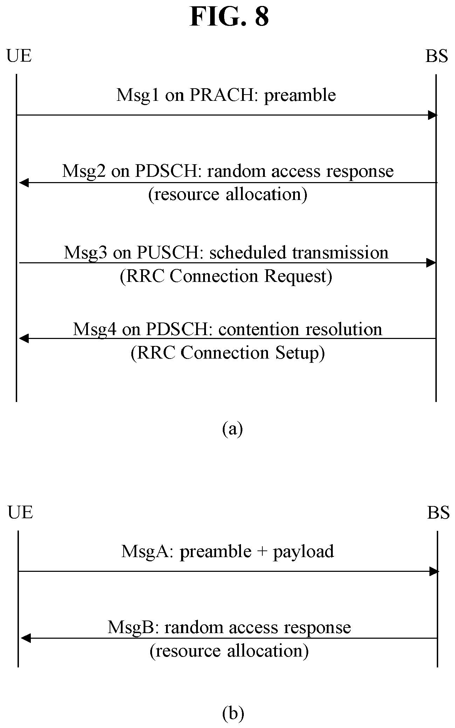

FIG. 8 illustrates random access procedures applicable to implementation(s) of the present disclosure. Particularly, FIG. 8(a) illustrates a 4-step random access procedure, and FIG. 8(b) illustrates a 2-step random access procedure.

A random access procedure may be used for various purposes including initial access, UL synchronization adjustment, resource allocation, handover, radio link reconfiguration after radio link failure, and positioning. Random access procedures are classified into a contention-based procedure and a dedicated (i.e., non-contention-based) procedure. The contention-based random access procedure generally involves initial access, whereas the dedicated random access procedure is used for UL synchronization reconfiguration in the event of handover, DL data arrival at a network, and positioning. In the contention-based random access procedure, the UE randomly selects a random access (RA) preamble. Accordingly, it is possible for a plurality of UEs to simultaneously transmit the same RA preamble, and thus a subsequent contention resolution process is required. In the dedicated random access procedure, the UE uses an RA preamble uniquely allocated to the UE by the BS. Therefore, the UE may perform the random access procedure without collision with other UEs.

Referring to FIG. 8(a), the contention-based random access procedure includes the following four steps. The messages transmitted in steps 1 to 4 may be referred to as message 1 (Msg1) to message 4 (Msg4), respectively.
- Step 1: The UE transmits an RA preamble on a PRACH.
- Step 2: The UE receives an RAR on a PDSCH from the BS.
- Step 3: The UE transmits UL data on a PUSCH to the BS. The UL data includes a Layer 2 (L2)/Layer 3 (L3) message.
- Step 4: The UE receives a contention resolution message on the PDSCH from the BS.

The UE may receive random access information in system information from the BS. For example, information regarding RACH occasions associated with SSBs on a cell may be provided in system information. The UE may select an SSB whose reference signal received power (RSRP), which is measured based on the SSB, exceeds a threshold from among SSBs received on the cell. Then, the UE may transmit an RA preamble on a PRACH associated with the selected SSB. For example, When the UE needs random access, the UE transmits Msg1 (e.g., a preamble) on a PRACH to the BS. The BS may identify each RA preamble by a time/frequency resource (RA occasion (RO)) carrying the RA preamble, and a preamble index (PI). Upon receipt of the RA preamble from the UE, the BS transmits an RAR message to the UE on a PDSCH. To receive the RAR message, the UE monitors an L1/L2 control channel (PDCCH) with a cyclic redundancy check (CRC) masked with a random access-RNTI (RA-RNTI), including scheduling information for the RAR message, within a preconfigured time window (e.g., ra-ResponseWindow). When receiving scheduling information on the PDCCH masked with the RA-RNTI, the UE may receive an RAR message on a PDSCH indicated by the scheduling information. The UE then checks whether there is an RAR directed to the UE in the RAR message. The presence or absence of the RAR directed to the UE may be determined by checking whether there is a random access preamble ID (RAPID) for the preamble transmitted by the UE. The index of the preamble transmitted by the UE may be identical to the RAPID. The RAR includes the index of the corresponding RA preamble, timing offset information (e.g., timing advance command (TAC)) for UL synchronization, UL scheduling information (e.g., UL grant) for Msg3 transmission, and UE temporary identification information (e.g., temporary-C-RNTI (TC-RNTI)). Upon receipt of the RAR, the UE transmits Msg3 on a PUSCH according to the UL scheduling information and the timing offset value in the RAR. Msg3 may include the ID (or global ID) of the UE. Further, Msg3 may include RRC connection request-related information (e.g., RRCSetupRequest message) for initial access to the network. After receiving Msg3, the BS transmits a contention resolution message, that is, Msg4 to the UE. When the UE receives the contention resolution message and succeeds in contention resolution, the TC-RNTI is changed to a C-RNTI. Msg4 may include the ID of the UE/RRC connection-related information (e.g., an RRCSetup message). When information transmitted in Msg3 does not match information received in Msg4 or when the UE has not received Msg4 for a predetermined time, the UE may determine that the contention resolution has failed and retransmit Msg3.

The dedicated random access procedure includes the following three steps. Messages transmitted in step 0 to step 2 may be referred to as Msg0 to Msg2, respectively. The BS may trigger the dedicated random access procedure by a PDCCH serving the purpose of commanding RA preamble transmission (hereinafter, referred to as a PDCCH order).
- Step 0: The BS allocates an RA preamble to the UE by dedicated signaling.
- Step 1: The UE transmits the RA preamble on a PRACH.
- Step 2: The UE receives an RAR on a PDSCH from the BS.

Step 1 and step 2 of the dedicated random access procedure may be the same as step 1 and step 2 of the contention-based random access procedure.

The NR system may require lower latency than the legacy system. Particularly for a latency-sensitive service such as URLLC, the 4-step random access procedure may not be preferable. A low-latency random access procedure may be needed for various scenarios in the NR system. When implementation(s) of the present disclosure are realized along with a random access procedure, the implementation(s) of the present disclosure may be carried out together with the following 2-step random access procedure to reduce latency involved in the random access procedure.

Referring to FIG. 8(b), the 2-step random access procedure may be performed in two steps: transmission of MsgA from the UE to the BS and transmission of MsgB from the BS to the UE. The MsgA transmission may include transmission of an RA preamble on a PRACH and transmission of UL payload on a PUSCH. In the MsgA transmission, the PRACH and the PUSCH may be transmitted in time division multiplexing (TDM). Alternatively, the PRACH and the PUSCH may be transmitted in frequency division multiplexing (FDM) in the MsgA transmission.

Upon receipt of MsgA, the BS may transmit MsgB to the UE. MsgB may include an RAR for the UE.

An RRC connection request-related message (e.g., RRCSetupRequest message) requesting establishment of a connection between the RRC layer of the BS and the RRC layer of the UE may be included in the payload of MsgA. In this case, MsgB may be used to transmit RRC connection-related information (e.g., RRCSetup message). In contrast, the RRC connection request-related message (e.g., RRCSetupRequest message) may be transmitted on a PUSCH based on a UL grant in MsgB. In this case, RRC connection-related information (e.g., RRCSetup message) related to the RRC connection request may be transmitted on a PDSCH associated with the PUSCH transmission after the PUSCH transmission based on MsgB.

Hereinafter, physical channels that may be used in the 3GPP-based wireless communication system will be described in detail.

A PDCCH carries DCI. For example, the PDCCH (i.e., DCI) carries information about transport format and resource allocation of a downlink shared channel (DL-SCH), information about resource allocation of an uplink shared channel (UL-SCH), paging information about a paging channel (PCH), system information about the DL-SCH, information about resource allocation for a control message, such as a random access response (RAR) transmitted on a PDSCH, of a layer (hereinafter, higher layer) positioned higher than a physical layer among protocol stacks of the UE/BS, a transmit power control command, information about activation/deactivation of configured scheduling (CS), etc. DCI including resource allocation information on the DL-SCH is called PDSCH scheduling DCI, and DCI including resource allocation information on the UL-SCH is called PUSCH scheduling DCI. The DCI includes a cyclic redundancy check (CRC). The CRC is masked/scrambled with various identifiers (e.g., radio network temporary identifier (RNTI)) according to an owner or usage of the PDCCH. For example, if the PDCCH is for a specific UE, the CRS is masked with a UE identifier (e.g., cell-RNTI (C-RNTI)). If the PDCCH is for a paging message, the CRC is masked with a paging RNTI (P-RNTI). If the PDCCH is for system information (e.g., system information block (SIB)), the CRC is masked with a system information RNTI (SI-RNTI). If the PDCCH is for a random access response, the CRC is masked with a random access-RNTI (RA-RNTI).

When a PDCCH on one serving cell schedules a PDSCH or a PUSCH on another serving cell, it is referred to cross-carrier scheduling. Cross-carrier scheduling with a carrier indicator field (CIF) may allow a PDCCH on a serving cell to schedule resources on another serving cell. When a PDSCH on a serving cell schedules a PDSCH or a PUSCH on the serving cell, it is referred to as self-carrier scheduling. When the cross-carrier scheduling is used in a cell, the BS may provide information about a cell scheduling the cell to the UE. For example, the BS may inform the UE whether a serving cell is scheduled by a PDCCH on another (scheduling) cell or scheduled by the serving cell. If the serving cell is scheduled by the other (scheduling) cell, the BS may inform the UE which cell signals DL assignments and UL grants for the serving cell. In the present disclosure, a cell carrying a PDCCH is referred to as a scheduling cell, and a cell where transmission of a PUSCH or a PDSCH is scheduled by DCI included in the PDCCH, that is, a cell carrying the PUSCH or PDSCH scheduled by the PDCCH is referred to as a scheduled cell.

A PDSCH is a physical layer UL channel for UL data transport. The PDSCH carries DL data (e.g., DL-SCH transport block) and is subjected to modulation such as quadrature phase shift keying (QPSK), 16 quadrature amplitude modulation (QAM), 64 QAM, 256 QAM, etc. A codeword is generated by encoding a transport block (TB). The PDSCH may carry a maximum of two codewords. Scrambling and modulation mapping per codeword may be performed and modulation symbols generated from each codeword may be mapped to one or more layers. Each layer is mapped to a radio resource together with a DMRS and generated as an OFDM symbol signal. Then, the OFDM symbol signal is transmitted through a corresponding antenna port.

For UL-SCH data transmission, the UE needs to have UL resources available to the UE, and for DL-SCH data reception, the UE needs to have DL resources available to the UE. The UL and DL resources are assigned to the UE through resource allocation by the BS. Resource allocation may include time domain resource allocation (TDRA) and frequency domain resource allocation (FDRA). In the present disclosure, UL resource allocation is also referred to as an UL grant, and DL resource allocation is also referred to as a DL assignment. The UL grant may be dynamically received by the UE on a PDCCH or in an RAR, or the UL grant may be semi-persistently configured to the UE through RRC signaling from the BS. The DL assignment may be dynamically received by the UE on a PDCCH or semi-persistently configured to the UE through RRC signaling from the BS.

On UL, the BS may dynamically allocate UL resources to the UE through PDCCH(s) addressed to a temporary identifier (cell radio network temporary identifier, C-RNTI). The UE monitors the PDCCH(s) to detect possible UL grants for UL transmission. The BS may allocate the UL resources using configured grants for the UE. Two types of configured grants, Type 1 and Type 2, may be used. In the case of Type 1, the BS directly provides a configured UL grant (including a periodicity) via RRC signaling. In the case of Type 2, the BS configures the periodicity of an RRC-configured UL grant via RRC signaling and may signal and activate or deactivate the configured UL grant through a PDCCH addressed to a configured scheduling RNTI (CS-RNTI). For example, in the case of Type 2, the PDCCH addressed to the CS-RNTI indicates that the corresponding UL grant may be implicitly reused according to the periodicity configured via RRC signaling until deactivation.

On DL, the BS may dynamically allocate DL resources to the UE through PDCCH(s) addressed to a C-RNTI. The UE monitors the PDCCH(s) to detect possible DL assignments. The BS may allocate the DL resources to the UE using semi-persistent scheduling (SPS). The BS may configure the periodicity of DL assignments configured via RRC signaling and signal and activate or deactivate the configured DL assignments through a PDCCH addressed to a CS-RNTI. For example, the PDCCH addressed to the CS-RNTI indicates that the corresponding DL assignment may be implicitly reused according to the periodicity configured via RRC signaling until deactivation.

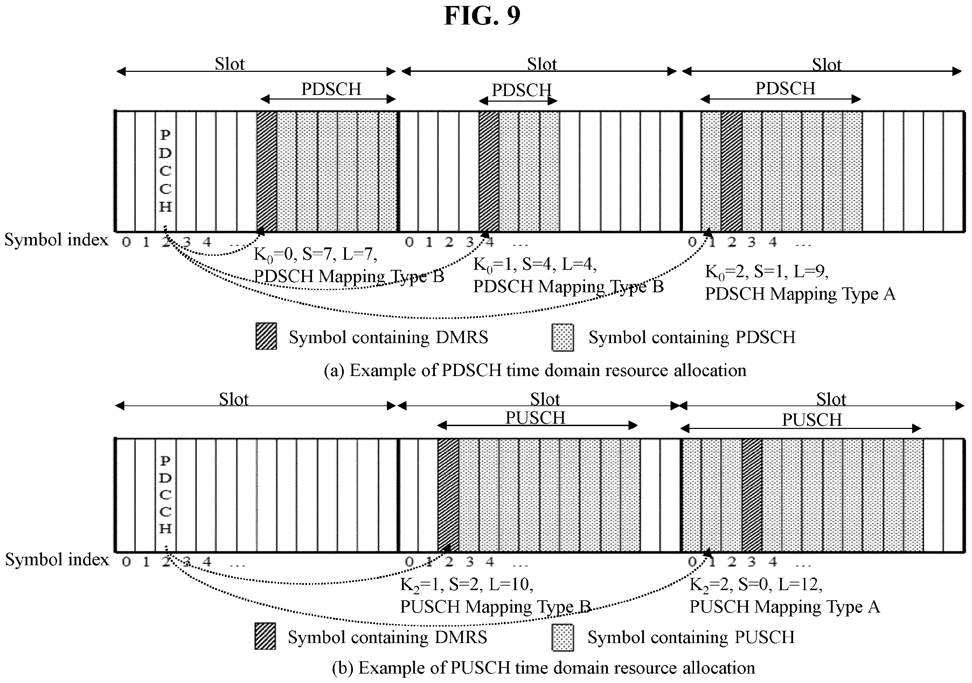

FIG. 9 illustrates an example of PDSCH TDRA caused by a PDCCH and an example of PUSCH TDRA caused by the PDCCH.

DCI carried by the PDCCH in order to schedule a PDSCH or a PUSCH includes a TDRA field. The TDRA field provides a value *m* for a row index *m*+1 to an allocation table for the PDSCH or the PUSCH. Predefined default PDSCH time domain allocation is applied as the allocation table for the PDSCH or a PDSCH TDRA table that the BS configures through RRC signaled *pdsch-TimeDomainAllocationList* is applied as the allocation table for the PDSCH. Predefined default PUSCH time domain allocation is applied as the allocation table for the PUSCH or a PUSCH TDRA table that the BS configures through RRC signaled *pusch-TimeDomainAllocationList* is applied as the allocation table for the PUSCH. The PDSCH TDRA table to be applied and/or the PUSCH TDRA table to be applied may be determined according a fixed/predefined rule (e.g., refer to 3GPP TS 38.214).

In PDSCH time domain resource configurations, each indexed row defines a DL assignment-to-PDSCH slot offset *K*₀, a start and length indicator *SLIV* (or directly, a start position (e.g., start symbol index *S*) and an allocation length (e.g., the number of symbols, *L*) of the PDSCH in a slot), and a PDSCH mapping type. In PUSCH time domain resource configurations, each indexed row defines a UL grant-to-PUSCH slot offset *K*₂, a start position (e.g., start symbol index *S*) and an allocation length (e.g., the number of symbols, *L*) of the PUSCH in a slot, and a PUSCH mapping type. *K*₀ for the PDSCH and *K*₂ for the PUSCH indicate the difference between the slot with the PDCCH and the slot with the PDSCH or PUSCH corresponding to the PDCCH. *SLIV* denotes a joint indicator of the start symbol *S* relative to the start of the slot with the PDSCH or PUSCH and the number of consecutive symbols, *L*, counting from the symbol *S.* There are two PDSCH/PUSCH mapping types: one is mapping type A and the other is mapping type B. In the case of PDSCH/PUSCH mapping type A, a DMRS is mapped to a PDSCH/PUSCH resource with respect to the start of a slot. One or two of the symbols of the PDSCH/PUSCH resource may be used as DMRS symbol(s) according to other DMRS parameters. For example, in the case of PDSCH/PUSCH mapping type A, the DMRS is located in the third symbol (symbol #2) or the fourth symbol (symbol #3) in the slot according to RRC signaling. In the case of PDSCH/PUSCH mapping type B, a DMRS is mapped with respect to the first OFDM symbol of a PDSCH/PUSCH resource. One or two symbols from the first symbol of the PDSCH/PUSCH resource may be used as DMRS symbol(s) according to other DMRS parameters. For example, in the case of PDSCH/PUSCH mapping type B, the DMRS is located at the first symbol allocated for the PDSCH/PUSCH. In the present disclosure, the PDSCH/PUSCH mapping type may be referred to as a mapping type or a DMRS mapping type. For example, in this specification, PUSCH mapping type A may be referred to as mapping type A or DMRS mapping type A, and PUSCH mapping type B may be referred to as mapping type B or DMRS mapping type B.

The scheduling DCI includes an FDRA field that provides assignment information about RBs used for the PDSCH or the PUSCH. For example, the FDRA field provides information about a cell for PDSCH or PUSCH transmission to the UE, information about a BWP for PDSCH or PUSCH transmission, and/or information about RBs for PDSCH or PUSCH transmission.

A CORESET, which is a set of time-frequency resources on which the UE is capable of monitoring a PDCCH, may be defined and/or configured. The CORESET has a time duration of one to three OFDM symbols and includes a set of PRBs. The PRBs included in the CORESET and the CORESET duration may be provided to the UE through higher layer (e.g., RRC) signaling. The UE may monitor a set of PDCCH candidates in configured CORESET(s) according to corresponding search space sets. In the present disclosure, monitoring implies decoding (blind decoding) of each PDCCH candidate based on monitored DCI formats. The MIB on a PBCH provides the UE with parameters (e.g., CORESET #0 configuration) for monitoring a PDCCH that schedules a PDSCH carrying SIB1. The PBCH may indicate that there is no associated SIB1. In this case, the UE may be provided with not only a frequency range where the UE is allowed to assume that there is no SSB associated with SSB1 but also may be provided with another frequency range where the UE is allowed to discover an SSB associated with SIB1. CORESET #0, which is a CORESET for scheduling at least SIB1, may be configured through the MIB or dedicated RRC signaling.

One or more CORESETs may be configured for the UE, and a plurality of CORESETs may overlap in the time/frequency domain. To configure a CORESET, the following parameters may be provided by the BS.
- controlResourceSetId: represents information on the identification (ID) of the CORESET.
- frequencyDomainResources: represents the frequency-domain resources of the CORESET and is indicated through a bitmap, where each bit corresponds to an RB group (= 6 consecutive RBs). For example, the MSB (Most Significant Bit) of the bitmap corresponds to the first RB group within a BWP. The RB group corresponding to a bit with a value of 1 is allocated as the frequency-domain resources of the CORESET.
- duration: represents the time-domain resources of the CORESET, and specifically, indicates the number of consecutive OFDMA symbols included in the CORESET. For example, duration may have a value ranging from 1 to 3.
- cce-REG-MappingType: represents a CCE-to-REG mapping type. Interleaved and non-interleaved types are supported.
- precoderGranularity: represents precoder granularity in the frequency domain.
- tci-StatesPDCCH: represents information regarding a transmission configuration indication (TCI) state for a PDCCH (e.g., TCI-StateID).
- tci-PresentInDCI: represents whether a TCI field is included in DCI.
- pdcch-DMRS-ScramblingID: represents information used for initialization of a PDCCH DMRS scrambling sequence.

The TCI state includes a quasi-co-location (QCL) relationship between one or more DL RSs and DM-RS ports of a PDSCH, DM-RS ports of a PDCCH, or CSI-RS ports of a CSI-RS resource. A TCI state index corresponding to each code point in a 'Transmission Configuration Indication' field among the fields in DCI that schedules the PDSCH is activated by a MAC control element (CE). A TCI state configuration for each TCI state index is performed through RRC signaling.

The set of the PDCCH candidates that the UE monitors is defined in terms of PDCCH search space sets. The search space sets may be common search space (CSS) sets or UE-specific search space (USS) sets. Each CORESET configuration is associated with one or more search space sets and each search space set is associated with one CORESET configuration.

A UE monitors a set of PDCCH candidates in one or more CORESETs on the active DL BWP on each activated serving cell configured with PDCCH monitoring according to corresponding search space sets where monitoring implies receiving each PDCCH candidate and decoding according to the monitored DCI formats.

The following table shows PDCCH search spaces.

**Table 4**

| Search Space | Type | RNTI | Use Case |
|---|---|---|---|
| Type0-PDCCH | Common | SI-RNTI on a primary cell | Broadcast of System Information |
| Type0A-PDCCH | Common | SI-RNTI on a primary cell | Broadcast of System Information |
| Type1-PDCCH | Common | RA-RNTI or TC-RNTI on a primary cell | Msg2, Msg4 in RACH |
| Type2-PDCCH | Common | P-RNTI on a primary cell | Paging System Information change notification |
| Type3-PDCCH | Common | INT-RNTI, SFI-RNTI, TPC-PUSCH-RNTI, TPC-PUCCH-RNTI, TPC-SRS-RNTI, C-RNTI, MCS-C-RNTI or CS-RNTI | Group signaling |
| UE Specific | UE Specific | C-RNTI, MCS-C-RNTI or CS-RNTI | UE signaling (e.g., PDSCH/PUSCH) |

The SS set may be configured by system information (e.g., MIB) or UE-specific higher layer (e.g., RRC) signaling. S (e.g., 10) SS sets or less may be configured in each DL BWP of a serving cell. For example, the following parameters/information may be provided for each SS set. Each SS set may be associated with one CORESET, and each CORESET configuration may be associated with one or more SS sets.
- searchSpaceId: indicates the ID of the SS set.
- controlResourceSetId: indicates the CORESET associated with the SS set.
- monitoringSlotPeriodicityAndOffset: indicates a PDCCH monitoring periodicity (in a unit of slot) and a PDCCH monitoring offset (in a unit of slot).
- monitoringSymbolsWithinSlot: indicates first OFDMA symbol(s) for PDCCH monitoring in a slot in which the PDCCH monitoring is configured. The first OFDMA symbol(s) are indicated by a bitmap, and each bit corresponds to a respective one of OFDMA symbols in the slot. The MSB of the bitmap corresponds to the first OFDM symbol in the slot. OFDMA symbol(s) corresponding to bit(s) with a value of 1 corresponds to the first symbol(s) in the CORESET in the slot.
- nrofCandidates: indicates the number of PDCCH candidates (e.g., one of 0, 1, 2, 3, 4, 5, 6, and 8) for each AL (where AL={1, 2, 4, 8, 16}).
- searchSpaceType: indicates whether the SS type is the CSS or USS.
- DCI format: indicates the DCI format of a PDCCH candidate.

The UE may monitor PDCCH candidates in one or more SS sets in a slot according to the configuration of the CORESET/SS set. An occasion (e.g., time/frequency resource) to monitor PDCCH candidates is defined as a PDCCH (monitoring) occasion. One or more PDCCH (monitoring) occasions may be configured within a slot.

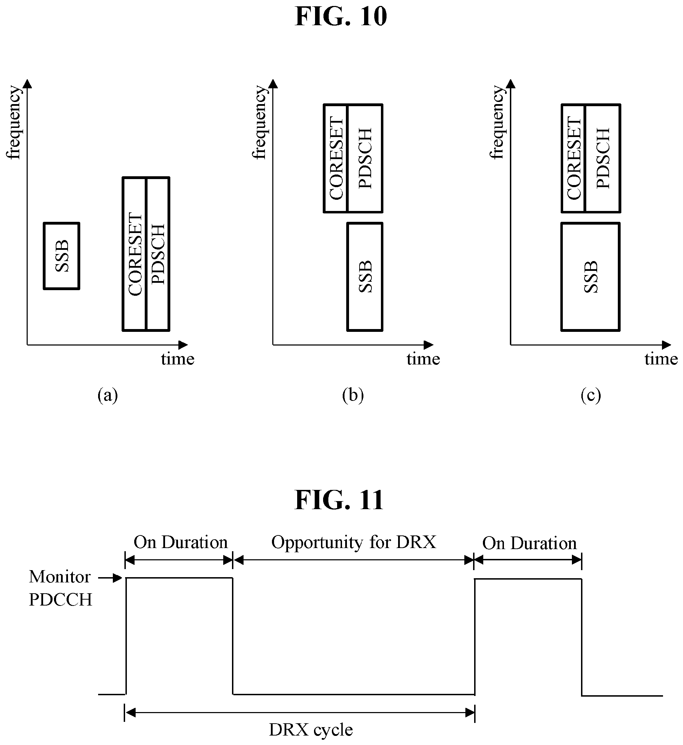

FIG. 10 illustrates SSB and CORESET multiplexing patterns. Specifically, FIG. 10(a) shows SSB and CORESET multiplexing pattern 1, FIG. 10(b) shows SSB and CORESET multiplexing pattern 2, and FIG. 10(c) shows SSB and CORESET multiplexing pattern 3. The SSB and CORSET multiplexing pattern may be predefined depending on the frequency range (FR) to which a corresponding cell belongs or the subcarrier spacing of an SSB or PDCCH.

As illustrated in FIG. 10, an SSB and CORESET may be multiplexed in the time domain, in the time and frequency domains, or in the frequency domain.

The set of the PDCCH candidates that the UE monitors is defined in terms of PDCCH search space sets. The search space sets may be common search space (CSS) sets or UE-specific search space (USS) sets. Each CORESET configuration is associated with one or more search space sets and each search space set is associated with one CORESET configuration.

A UE monitors a set of PDCCH candidates in one or more CORESETs on the active DL BWP on each activated serving cell configured with PDCCH monitoring according to corresponding search space sets where monitoring implies receiving each PDCCH candidate and decoding according to the monitored DCI formats.

FIG. 11 illustrates a discontinuous reception (DRX) operation. Specifically, FIG. 11 shows a DRX cycle for a UE in the RRC_CONNECTED state.

The UE may perform the DRX operation while executing the processes and/or methods according to implementation(s) of the present disclosure. DRX configurations/operations are defined in NR specifications (e.g., Rel-17). DRX, which is used to reduce unnecessary power consumption of the UE, has the following features. In DRX, a structure for the UE in the RRC_IDLE state (hereinafter referred to as I-DRX) and a structure for the UE in the RRC_CONNECTED state (hereinafter referred to as C-DRX) are defined separately. The two DRX structures are designed such that a period (e.g., active time period or on-duration period) in which the UE expects to receive a DL signal periodically occurs, thereby reducing unnecessary power consumption of the UE in other periods. In particular, in the case of C-DRX, the start position of the on-duration period is periodically defined according to NR Rel-16 specifications. In this case, the size (i.e., DRX cycle) of the configured period may be determined/configured through higher layer signaling such as RRC signaling provided by the BS to the UE.

Referring to FIG. 11, a DRX cycle includes an On Duration and an Opportunity for DRX. The DRX cycle defines a time interval between periodic repetitions of the On Duration followed by an inactivity possible period. The On Duration is a time period during which the UE monitors a PDCCH. When the UE is configured with DRX, the UE performs PDCCH monitoring during the On Duration. When the UE successfully detects a PDCCH during the PDCCH monitoring, the UE starts an inactivity timer and is kept awake. On the contrary, when the UE fails in detecting any PDCCH during the PDCCH monitoring, the UE transitions to a sleep state after the On Duration. Accordingly, when DRX is configured, the UE may perform PDCCH monitoring/reception discontinuously in the time domain in the procedure and/or method according to implementation(s) of the present disclosure. For example, when DRX is configured, PDCCH reception occasions (e.g., slots with PDCCH search spaces) may be configured discontinuously according to a DRX configuration in the present disclosure. On the contrary, when DRX is not configured, the UE may perform PDCCH monitoring/reception continuously in the time domain. For example, when DRX is not configured, PDCCH reception occasions (e.g., slots with PDCCH search spaces) may be configured continuously in the present disclosure. Irrespective of whether DRX is configured, PDCCH monitoring may be restricted during a time period configured as a measurement gap. DRX configuration information is received through higher layer (e.g., RRC) signaling, and DRX ON/OFF is controlled by DRX commands from the MAC layer. Once DRX is configured, the UE may discontinuously perform PDCCH monitoring as shown in FIG. 8.

The following table describes a DRX operation of a UE. Referring to the following table, DRX configuration information is received by higher-layer signaling (e.g., RRC signaling), and DRX ON/OFF is controlled by a DRX command from the MAC layer. Once DRX is configured, the UE may perform PDCCH monitoring discontinuously, as illustrated in FIG. 11.

**Table 5**

| | Type of signals | UE procedure |
|---|---|---|
| 1st step | RRC signalling (MAC-CellGroupConfig) | - Receive DRX configuration information |
| 2nd Step | MAC CE ((Long) DRX command MAC CE) | - Receive DRX command |
| 3rd Step | - | - Monitor a PDCCH during an on-duration of a DRX cycle |

MAC-CellGroupConfig includes configuration information required to configure MAC parameters for a cell group. MAC-CellGroupConfig may also include DRX configuration information. For example, MAC-CellGroupConfig may include the following information in defining DRX.
- Value of drx-onDurationTimer: configures the duration at the beginning of a DRX cycle.
- Value of drx-SlotOffset: configures the delay before starting the drx-onDurationTimer.
- Value of drx-InactivityTimer: the duration after the PDCCH occasion in which a PDCCH indicates a new UL or DL transmission for the MAC entity.
- Value of drxRetransmissionTimerDL (per DL HARQ process except for the broadcast process): configures the maximum duration until a DL retransmission is received.
- Value of drxRetransmissionTimerUL (per UL HARQ process): configures the maximum duration until a grant for UL retransmission is received.
- Value of drx-HARQ-RTT-TimerDL (per DL HARQ process except for the broadcast process): configures the maximum duration from reception of initial DL transmission to reception of DL assignment for HARQ retransmission.
- Value of drx-HARQ-RTT-TimerUL (per UL HARQ process): configures the maximum duration from reception of a grant for initial UL transmission to reception of a grant for UL retransmission.
- drx-LongCycleStartOffset: configures the Long DRX cycle and drx-StartOffset which defines the subframe where the Long and Short DRX cycle starts.
- drx-ShortCycle (optional): configures the Short DRX cycle.
- drx-ShortCycleTimer (optional): configures the duration the UE shall follow the Short DRX cycle. For example, a value in multiples of the short DRX cycle may be configured by drx-CycleTimer. For example, the value of n may correspond to n*drx-ShortCycle.

The UE may perform PDCCH monitoring on serving cells within a DRX group if the DRX group is within the active time. In this case, the DRX group refers to a group of serving cells that are configured by RRC and have the same DRX active time. The active time here refers to a total duration during which the UE monitors the PDCCH. The active time may include the ON duration of a DRX cycle, the time when the UE performs continuous reception while the inactivity timer has not expired, and the time when the UE performs continuous reception while waiting for a retransmission opportunity. For example, when DRX is configured, the Active Time for serving Cells in a DRX group includes the time while i) drx-onDurationTimer or drx-InactivityTimer configured for the DRX group is running; or ii) drx-RetransmissionTimerDL or drx-RetransmissionTimerUL is running on any serving Cell in the DRX group; or ra-ContentionResoultionTimer or msgB-RsponseWindow is running; or a PDCCH indicating a new transmission addressed to the C-RNTI of a MAC entity of the UE has not been received after successful reception of a random access response for the Random Access Preamble not selected by the MAC entity among the contention-based random access preambles.

The UE may be configured with one or multiple DRX groups through RRC signaling from the BS. For example, if two DRX groups are configured, each serving cell is uniquely assigned to one of the two DRX groups. The DRX parameters: drx-onDurationTimer and drx-InactivityTimer are configured separately for each DRX group. The DRX parameters: drx-SlotOffset, drx-RetransmissionTimerDL, drx-RetransmissionTimerUL, drx-LongCycleStartOffset, drx-ShortCycle (optional), drx-ShortCycleTimer (optional), drx-HARQ-RTT-TimerDL, and drx-HARQ-RTT-TimerUL are common to the DRX groups. Since each serving cell belongs to only one of the DRX groups, and the DRX parameters drx-onDurationTimer and drx-InactivityTimer are configured for each DRX group, while the other DRX parameters are common to the DRX groups, it may be considered that the serving cell is associated with only one set of DRX parameters.

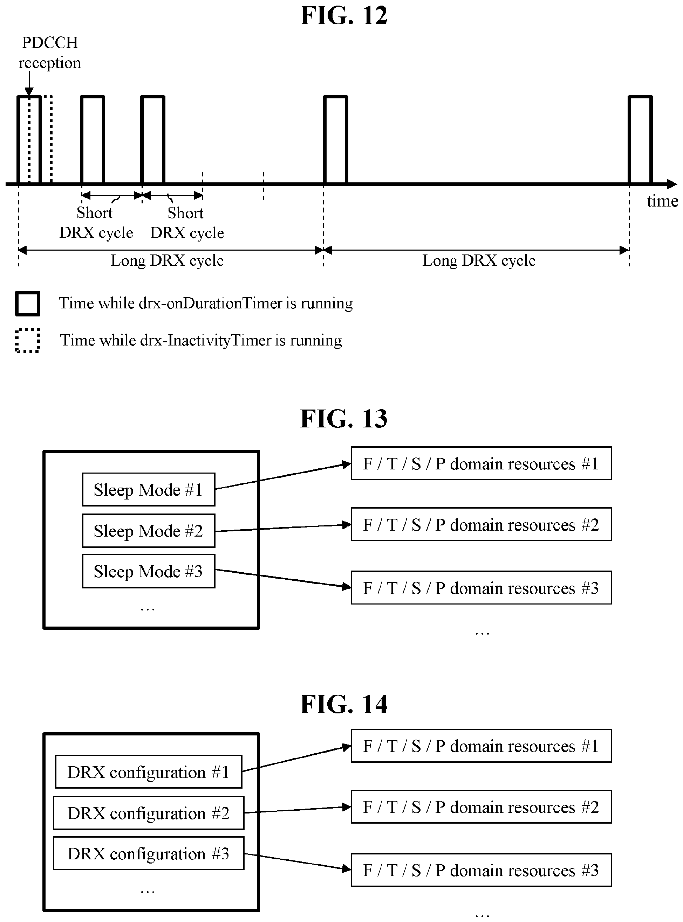

FIG. 12 illustrates a case in which a long DRX cycle and a short DRX cycle are configured. Specifically, FIG. 12 shows a case in which drx-ShortCycleTimer is set to 2.

The BS may configure a long DRX cycle and an additional short DRX cycle, which is shorter than the long DRX cycle. If no short DRX cycle is configured, the UE may follow the long DRX cycle. When configuring the short DRX cycle, the BS may set the duration of the long DRX cycle to be a positive integer multiple of the short DRX cycle. If there is no data activity during the on-duration of the long DRX cycle, the UE may follow the long DRX cycle as if no short DRX cycle is configured. If there is data activity during the on-duration of the long DRX cycle, for example, while drx-onDurationTimer is running, the UE switches to the short DRX cycle and follows the short DRX cycle for a certain period of time (e.g., while drx-ShortCycleTimer is running). Referring to FIG. 12, if there is no data activity during the time that the UE follows the short DRX cycle, for example, if there is no data activity during the period defined by drx-ShortCycleTimer * drx-ShortCycle, the UE switches from short DRX cycles each having the duration by drx-ShortCycleTimer to the long DRX cycle.

The UE does not need to monitor a PDCCH across the entire frequency of a cell, and in this case, the UE only monitors the PDCCH on one active BWP of the cell. A BWP inactivity timer, independent of a DRX inactivity timer, may be configured for the cell and used to switch the active BWP to the default BWP. The BWP inactivity timer is restarted upon successful PDCCH decoding, and the switch to the default BWP occurs when the BWP inactivity timer expires.

According to the current 5G specifications, in FIG. 13, SIB1, which is a part of the minimum system information required for cell access, is transmitted on a DL-SCH with a periodicity of 160 ms or a variable transmission repetition periodicity within 160 ms. The default transmission repetition periodicity of SIB1 is 20 ms, but the actual transmission repetition periodicity depends on the network implementation. For SSB and CORESET multiplexing pattern 1, the transmission repetition period of SIB1 is 20 ms. For SSB and CORESET multiplexing patterns 2/3, the transmission repetition period of SIB1 is the same as the SSBI period. A PDCCH monitoring occasion on which the UE attempts to decode the SIB1 PDCCH may be determined based on information in the MIB, for example, pdcch-ConfigSIB1. For example, during cell search, if the UE determines based on the MIB that a Type0-PDCCH CSS set exists, the UE may determine the number of consecutive RBs and the number of consecutive symbols for the CORESET of the Type0-PDCCH CSS set from controlResourceSetZero in pdcch-ConfigSIB1. The UE may also determine PDCCH monitoring occasions from searchSpaceZero in pdcch-ConfigSIB1. For example, for an SSB with index i, the system frame number (SFN) of a frame of the related CORESET, SFNc; a first slot including Type-0 monitoring occasion(s) in the frame corresponding to SFNc, slot n₀; and a combination of parameter values required to determine the index of the first symbol of the corresponding CORESET in slot n₀ may be provided by searchSpaceZero. The UE may monitor the Type0-PDCCH CSS set in the PDCCH monitoring occasion to detect the SIB1 PDCCH. The UE may determine frequency resource allocation and time resource allocation of the SIB1 PDSCH from DCI carried by the SIB1 PDCCH. The UE may receive/decode SIB1 based on the frequency resource allocation and time resource allocation.

When the UE has no ongoing data transmissions/receptions, the UE enters RRC_IDLE or RRC_INACTIVE to save power. When DL data for the UE arrives in the network, the network transmits a paging message on a paging occasion (PO) to trigger an RRC Setup procedure and an RRC Connection Resume procedure. The PO refers to a set of PDCCH monitoring occasions and may consist of multiple time slots (e.g., subframes or OFDM symbols). DCI with a CRC scrambled with a P-RNTI may be transmitted on the PO. In multi-beam operations, the UE assumes that the same paging message is repeated in all transmitted beams. The paging message is same for both radio access network (RAN) initiated paging and core network (CN) initiated paging. One paging frame (PF) is one radio frame and may contain one or multiple PO(s) or starting point of a PO. The UE monitors one paging occasion (PO) per DRX cycle. The PF and PO for paging may be determined by predetermined equations. For example, in some implementations, a system frame number (SFN) for the PF may be determined by (SFN + PF_offset) mod T = (T div N)*(UE_ID mod N), and the index i_s indicating the index of the PO may be determined by i_s = floor(UE_ID) mod Ns, where T is the DRX cycle of the UE and determined by the shortest of the UE specific DRX value(s) and/or a default DRX value broadcast in system information, N is the number of total paging frames in T, Ns is the number of paging occasions for a PF, PF_offset is an offset used for PF determination, and UE_ID is a value determined based on 5G-S-TMSI. The following parameters may be signaled in SIB1: a parameter related to the number of POs per paging frame, Ns; a parameter used to derive the number of total paging frames in T, nAndPagingFrameOffset; a parameter related to the number of PDCCH monitoring occasions corresponding to SSBs in a PO, nrofPDCCH-MonitoringOccasionsPerSSB-InPO; and the length of a default DRX cycle. The values of N and PF_offset are derived from the parameter nAndPagingFrameOffset. The PDCCH monitoring occasions for paging are determined based on the following parameters: a parameter indicating the first PDCCH monitoring occasion for paging of each PO of the PF, firstPDCCH-MonitoringOccasionOfPO; and the parameter nrofPDCCH-MonitoringOccasionsPerSSB-InPO. For paging in the initial DL BWP, the parameter firstPDCCH-MonitoringOccasionOfPO may be signaled in SIB1. For paging in a DL BWP other than the initial DL BWP, the parameter firstPDCCH-MonitoringOccasionOfPO may be signaled in the corresponding BWP configuration. Paging DRX is defined which requires the UE in the RRC_IDLE or RRC_INACTIVE state to monitor paging channels during one PO per DRX cycle. The following paging DRX cycles may be configured by the network: i) for CN-initiated paging, a default cycle is broadcast in system information, ii) for CN-initiated paging, a UE specific cycle may be configured via non-access stratum (NAS) signaling, iii) for RAN-initiated paging, a UE-specific cycle is configured via RRC signaling. The UE uses the shortest of the DRX cycles applicable. For example, a UE in RRC_IDLE may use the shortest of the first two DRX cycles above, and a UE in RRC _INACTIVE may use the shortest of the three DRX cycles.

The energy saving of the BS is significantly considered in wireless communication systems, including 3GPP, due to its potential contribution to building eco-friendly networks through reduction of carbon emissions and curtailing operational expenditures (OPEX) for communication operators. In particular, as the demand for high transmission rates has escalated with the advent of 5G communications, BSs have been required to be equipped with a greater number of antennas and provide services in broader bandwidths and frequency bands. According to recent study, the energy cost of the BS has reached up to 20% of the total OPEX. Due to the increased interest in the energy saving of the BS, 3GPP NR release 18 has approved a new study item called "study on network energy savings." For example, to enhance energy-saving capabilities in terms of the transmission and reception of the BS, this study investigates how to achieve more efficient operations for transmission and/or reception in the time, frequency, space, and power domains dynamically and/or semi-statically with finer granularity of adaptation based on one or more network energy-saving techniques, using potential support/feedback from the UE and potential UE support information.

In some implementations of the present disclosure, the BS may switch to a network energy saving (NES) mode (e.g., sleep mode) by turning off some of the hardware components of the BS in light-load situations or when there is no data to transmit/receive. However, if the BS needs to periodically transmit signals/channels, if DL data suddenly needs to be transmitted, or if an SR is received from the UE, the BS needs to turn the hardware components back on and switch to a non-NES mode (e.g., non-sleep mode or active mode) to perform transmission/reception. Therefore, in some implementations of the present disclosure, the BS may configure or define multiple sleep modes and predefine which hardware components of the BS may be turned off for each sleep mode. When there is frequent data to transmit/receive, the BS operates between a shallow sleep mode and an active mode to turn off only the hardware components that may be quickly turned on and off. As the time without transmission/reception increases, the BS enters a deep sleep mode to turn off more hardware components, thereby saving more energy. However, while the deep sleep mode may save more energy by turning off more hardware, it may require a longer delay and higher transition energy to switch back to the active mode when data to transmit/receive occurs, compared to the shallow sleep mode. In some implementations of the present disclosure, when the BS operates with multiple sleep modes, the BS may associate frequency-domain resources with each sleep mode. Based on the transition between the sleep modes, the BS may adjust frequency-domain resources to achieve energy saving. The above energy saving method where resources are associated with each sleep mode may be applied not only in the frequency domain but also in the time domain, spatial domain, and/or power domain, individually or in combination, to further enhance the energy saving effect.

Hereinafter, implementations of the present disclosure that utilize multiple sleep modes will be described. For convenience of explanation, a sleep time or sleep duration during which the BS and/or UE operates in the sleep mode will be referred to as a non-active time/duration, inactive time/duration, or OFF time/duration. .

In the following, the operation of the BS in the NES mode for the purpose of energy saving (ES) may mean that the BS preconfigures a plurality of OFF periods (i.e., discontinuous transmission (DTX) periods) where transmission of a specific DL signal is turned off during a specific time period and then dynamically indicates one of the OFF periods to notify that the corresponding DL signal will not be transmitted during the predefined time period, in order to achieve power consumption reduction for both the BS and UE. The NES mode may also be applied not only to the time domain but also to the following operations in the frequency domain: BWP switching, dynamic RB adaptation, etc. For the spatial domain, the NES mode may refer to an operation mode in which when the BS semi-statically or dynamically disables a specific receiving antenna port, the BS refrains from performing transmission and/or reception on the corresponding antenna port to achieve power consumption reduction for both the BS and UE.

In the following description, the term "DRX" is primarily used for convenience, but DRX from the perspective of the UE may correspond to DTX from the perspective of the network, and DRX from the perspective of the network may correspond to DTX from the perspective of the UE. Therefore, in some implementations described below, DRX may be a concept that includes DTX, and DTX may be a concept that includes DRX. In particular, while the NES mode operation of the BS is mainly described using the expression "DRX of the BS," transmission/reception that is turned off during the OFF duration in the NES mode of the BS may include not only DL signals/channels but also UL signals/channels. Thus, in the implementations of the present disclosure described later, DRX operation may involve turning off both transmission and reception operations as well as turning off reception or transmission operations.
**<Method #1> A method of configuring associations between each sleep mode and resources in the frequency/time/spatial/power domain (e.g., the bandwidth of a BWP) and adjusting the associated resources according to the sleep mode transition of the BS when the BS operates with multiple sleep modes for energy saving**
   **> (1-1) A method of preconfiguring associations between resource(s) for each sleep mode of the BS and using the resources associated with each sleep mode in each domain according to the sleep mode transition indication/configuration of the BS**
      **>> i. In the case of frequency-domain resources, the deeper the sleep mode, the BWP switches to a smaller bandwidth, the bandwidth of the BWP is reduced, or it is associated with a smaller RB set (group) within the BWP.**
      **>> ii. In the case of time-domain resources, the deeper the sleep mode, the longer the OFF duration of the BS is configured, or the more the ON durations of more UE groups are aligned (or it switches to a specific DRX (C-DRX or I-DRX) group). Alternatively, the transmission of common signals/channels is reduced, or the transmission periodicity thereof is extended.**
      **>> iii. In the case of spatial-domain resources, the deeper the sleep mode, the more transmission and reception (TRX) are turned off (antenna ports, panels, or transmission and reception points (TRP) ON/OFF). Alternatively, CSI-RS resources and reporting are turned off, or a reduced TCI state list is applied.**
   **> (1-2) A method of operating a timer when the UE independently adjusts resources associated to the sleep mode without separate indications from the BS**
      **>> i. A method of operating an existing inactivity timer (e.g., BWP inactivity timer, C-DRX inactivity timer, or I-DRX related timers) along with a NES timer for the sleep mode transition**
         **>>> If any one of the two timers expires, the transition to the sleep mode occurs.**
         **>>> One of the two timers is prioritized, and when the corresponding timer expires, the transition to sleep mode occurs.**
         **>>> The transition to the sleep mode occurs only when the two timers expire.**
      **>> ii. A method of preconfiguring multiple maximum values for the NES timer and then indicating one of the maximum values through DCI/MAC CE**
         **>>> The UE operates under the assumption of the NES sleep mode if there is no activity until the timer reaches the maximum value (or starts from the maximum value and reaches 0).**
         **>>> The UE stops running the existing BWP inactivity timer and keeps the timer in a reset state from the time when the NES sleep mode timer reaches the (indicated) maximum value (or from the time when the timer starts from the maximum value and reaches 0).**
      **>> iii. A method of differentiating the determination of "inactivity" when operating the existing BWP inactivity timer and the determination of "inactivity" when operating the NES sleep mode timer**
         **>>> The NES sleep mode timer is related to inactivity in the network (NW) rather than inactivity of the UE. Therefore, when receiving any DCI indication/signaling that does not include DL/UL grants or when detecting any DCI indication/signaling that includes DL/UL grants and/or any DL signal/channel (e.g., SSB/CSI-RS/SPS PDSCH), the UE restarts the timer.**
         **>>> When indicated to operate the NES sleep mode timer (with the maximum value), the UE operates to release all configured grants (CG) and/or semi-persistent scheduling (SPS) that are preconfigured/indicated.**

The methods in (1-1) and (1-2) may be applied individually or in combination. Hereinafter, the methods described in (1-1) and (1-2) will be described in more detail.

FIGS. 13 and 14 illustrate energy saving methods according to some implementations of the present disclosure. In FIGS. 13 and 14, "F" represents frequency, "T" represents time, "S" represents spatial, and "P" represents power. F/T/S/P-domain resources #i refer to a set of frequency-domain resources, time-domain resources, spatial-domain resources, and/or power-domain resources. In the present disclosure, frequency/time/spatial/power-domain resources #i are also referred to as frequency/time/spatial/power-domain NES techniques #i.

In relation to the UE power saving mode, three sleep modes (e.g., micro sleep, light sleep, and deep sleep) have been defined and studied according to the level of energy saving. Energy is saved through transitions between the sleep modes based on the duration of the IDLE state with no data activity. Similarly, referring to FIG. 13, the BS may have multiple sleep modes with different levels of energy saving (sleep mode #1, sleep mode #2, sleep mode #3, ... as shown in FIG. 13) and achieve energy saving effects by transitioning from the active mode to each sleep mode based on the IDLE duration. The deeper the level of the sleep mode, the BS needs to remain inactive for a longer period of time to transition to the sleep mode. The BS may save more energy by turning off more hardware components. Additionally, as illustrated in FIG. 13, the BS may achieve energy saving effects by associating time/frequency/spatial/power-domain resources used in transmission between the BS and UE with each sleep mode. That is, the deeper the sleep mode, the less the amount of resources used for transmission, thereby achieving the energy saving effects.

Therefore, when the BS operates with multiple sleep modes for energy saving, the BS may configure associations between each sleep mode level and resources in the frequency/time/spatial/power domain (e.g., the bandwidth of a BWP) and adjust the associated resources according to the sleep mode transition of the BS. In some implementations, when transitioning from the active mode to each sleep mode, the BS may indicate or configure the transition to the sleep mode to UEs in a cell via group-common DCI (or a group-common MAC CE). Additionally, the indication/configuration may include information about a specific sleep mode to which the BS intends to transition. Based on the indication, the UE may use frequency/time/spatial/power-domain resources pre-associated with the specific sleep mode to transmit/receive. Even if the BS does not separately indicate resources for transmission/reception for each domain, the UE may adjust the amount of resources, and thus both the BS and UE may achieve energy saving effects.

For example, in the case of frequency-domain resources, the deeper the sleep mode, the BWP may switch to a smaller bandwidth, the bandwidth of the BWP may be reduced, or it may be associated with a smaller RB set (group) within the BWP. When a sleep mode is associated with an RB set (group), it means that among RBs included in the BWP, an RB set or an RB set group is defined or configured in advance, and depending on the sleep mode, transmission/reception may be performed using only a specific RB set or RB set group, rather than using all the RBs of the BWP. Additionally, in the case of BWP switching, for example, the BS may configure multiple BWPs with different bandwidth sizes for each of the sleep modes of the BS and switch the BWP according to the sleep mode transition of the BS. Therefore, the UE may save energy by using fewer frequency resources (e.g., RB(s)) for transmission/reception as the BS switches to the sleep mode.

In the case of time-domain resources, as the sleep mode becomes deeper, the BS may configure a longer OFF duration of the BS, align the ON duration of more UE groups (or switch to a specific DRX (C-DRX or I-DRX) group), reduce the transmission of common signals/channels, or extend the transmission periodicity thereof. For example, the BS may preconfigure multiple time-domain symbol ON/OFF patterns and apply a specific time-domain ON/OFF pattern based on the sleep mode transition configuration/indication of the BS. In this case, as the sleep mode becomes deeper, the BS may configure a longer DTX period using symbol OFF (e.g., by configuring a time period during which transmission or reception (or both) are not performed at the symbol level). Additionally, for UEs with C-DRX configured in a cell, the start point and duration of the ON duration may be different for each UE. To check whether the UE has transmission/reception during the ON duration (for example, to transmit a DL assignment or UL grant to each UE with C-DRX configured or receive a CSI report), the BS needs to periodically wake up and transition to the active mode. As a result, from the perspective of the BS, the sleep time may be significantly short due to the need to transition between the sleep and active modes because of the ON duration of multiple UEs. Alternatively, UEs with I-DRX configured perform PDCCH monitoring during a paging occasion (PO) to check if there is any paging directed to the UEs in each DRX cycle. From the perspective of the BS, since paging needs to be transmitted during the POs of multiple UEs rather than a single UE, if the POs are distributed, the available sleep time may be significantly short. Therefore, based on the sleep mode configuration/indication of the BS, the ON durations (or POs) of the UEs with C-DRX (or I-DRX) configured need to be aligned to allow the BS to maximize the sleep time thereof while multiple UEs are in OFF durations, thereby saving energy. Alternatively, from the perspective of the UE, the UE may receive multiple candidate ON duration positions from the BS. The UE may adjust the ON duration position based on the sleep mode of the BS, in association with a specific ON duration position among the candidates for each sleep mode. Alternatively, the BS may configure multiple DRX (C-DRX or I-DRX) groups for NES, and depending on the sleep mode indication/configuration of the BS, the UE may apply the DRX parameters of a specific DRX group among the DRX groups configured to the UE. In this case, each DRX group may be associated with the sleep mode of the BS. Additionally, the BS may associate the transmission periodicity or the number of transmissions of always-on common signals/channels, such as an SSB/SIB1, with the sleep mode of the BS. As the BS transitions to a deeper sleep mode, the BS may reduce the number of transmissions or extend the transmission periodicity, thereby maximizing the sleep time of the BS and achieving energy saving. The UE may also save energy by maintaining the sleep mode without performing transmission/reception during the symbol OFF duration, based on to the indication of the BS. If the transmission of common signals/channels such as the SSB/SIB1 is reduced or the transmission periodicity is extended, the UE may maintain the sleep mode for a longer period accordingly.

In the case of spatial-domain resources, as the sleep mode becomes deeper, the BS may turn off more TRX (antenna ports, patterns, or TRP ON/OFF), turn off CSI-RS resource reporting, or apply a reduced TCI state list as the sleep mode becomes deeper. For example, if the BS performs transmission/reception through 64 TX/RX radio units (RU) in the active mode, the BS may use only 32 TX/RX RUs in sleep mode 1. In sleep mode 2, the BS may use only 16 TX/RX RUs for transmission/reception, thereby saving energy. Alternatively, in the active mode, all 4 TRPs may be used. However, in sleep mode 1, only 2 TRPs are turned on, and in sleep mode 2, only 1 TRP is turned on while the remaining TRPs are turned off, thereby saving energy. Additionally, among CSI-RS resources preconfigured for the UE, specific resource(s) may be inactive for each sleep mode. The BS does not transmit a CSI-RS on the specific resource(s), and the UE does not expect to receive the CSI-RS or transmit any report, thereby saving energy.

Meanwhile, the UE may independently adjust resources associated with the sleep mode based on a timer without separate indications from the BS, and in this case, the NES timer for sleep mode transitions may be configured/used. When the UE is configured with C-DRX, the inactivity timer is semi-statically configured, and the NES timer for the sleep mode transition of the BS may be additionally configured. In this case, the UE may transition to the sleep mode if either of the two timers (i.e., DRX inactivity timer or NES timer) expires. Alternatively, the UE may prioritize specific one of the two timers and transition to the sleep mode when the specific timer expires, or the UE may transition to the sleep mode only when the two timers expire. Additionally, the existing BWP or C-DRX inactivity timer is semi-statically configured through higher layer signaling (e.g., RRC signaling). In some implementations of the present disclosure, the NES timer may be operated more dynamically. For example, the BS may preconfigure multiple maximum values for the NES timer and indicate one of the maximum values through (group-common) DCI/MAC CE. The UE may operate the timer. If there is no activity until the timer reaches the maximum value (or starts from the maximum value and reaches 0), the UE may assume the NES sleep mode and operate accordingly. In other words, even without specific indications from the BS, the UE may assume that the BS will transition to the NES mode if there is no data activity until the timer reaches the maximum value (or starts from the maximum value and reaches 0). The UE may also transition to the sleep mode to save energy. Additionally, when the NES sleep mode timer reaches the (indicated) maximum value (or starts from the maximum value and reaches 0), the UE may stop the inactivity timers (that are running) and keep the timers in a reset state to ensure that the existing inactivity timers are not continued.

Next, it may be necessary to differentiate the determination of "inactivity" when operating the existing inactivity timer and the determination of "inactivity" when operating the NES sleep mode timer. For example, according to the current 3GPP 38.321 MAC standard, the BWP inactivity timer starts or restarts when a DL/UL grant PDCCH is received or when data transmission/reception occurs through a CG/SPS. However, the timer continues to run without being affected by other DCI indications or signaling (i.e., without restarting). Since the NES sleep mode timer is related to inactivity in the BS rather than inactivity in the UE, the UE may restart the timer when receiving any DCI indication/signaling that does not include DL/UL grants or when detecting any DCI indication/signaling that includes DL/UL grants and/or any DL signal/channel (e.g., SSB/CSI-RS/SPS PDSCH). Additionally, when the UE is instructed to operate the NES sleep mode timer (with the maximum value), the UE may operate to release all preconfigured/indicated CGs/SPS.

In some implementations, when the UE is configured with DRX (C-DRX or I-DRX), frequency/time/spatial/power-domain NES techniques may be applied differently depending on the active time period and the non-active time period within the DRX cycle. For example, the frequency/time/spatial/power-domain NES techniques may be applied during the active time of the DRX cycle, but not applied outside the active time period. For instance, assuming that transmission/reception is performed with 64 antenna ports and a 100 MHz bandwidth during the active time when the BS does not apply NES techniques, if NES techniques are applied, PDCCH/PDSCH transmission/reception may be performed by reducing the number of antenna ports used during the active time to 32 and reducing the bandwidth to 50 MHz, which may lead to energy saving. Outside the UE C-DRX active time period, the UE does not receive a PDCCH/PDSCH and only performs SR or CSI-RS reception. Therefore, the energy saving benefits that may be obtained through NES techniques may not be significant. As a result, the time/frequency/spatial/power-domain NES techniques proposed above may not be applied outside the active time period of the DRX cycle. For example, when the UE is configured with C-DRX, the UE is provided with an onDuration timer, and during each onDuration in the DRX cycle, the UE performs monitoring for PDCCH reception in every slot. If the UE receives a PDCCH during the onDuration, the UE may wait for transmission/reception scheduling from the BS until the inactivity timer starts and expires. Additionally, when a retransmission timer is running, the UE maintains the active state for retransmission. Here, the active time within the DRX cycle refers to the union of periods during which the UE(s) performs PDCCH monitoring in every slot while operating according to the DRX configurations provided by the BS. Alternatively, in some implementations, the active time may be limited to a period during which the onDuration timer is running, or the active time may be limited to a period corresponding to the union of the time period during which the onDuration timer is running and the time period during which the inactivity timer is running. Additionally, when a timer (used to define/determine the active time) expires, or when the UE receives a DRX command during the active time, the UE enters the inactive time, during which the UE does not receive a PDCCH until a next onDuration in the following DRX cycle.

Additionally, in some implementations, when the BS provides multiple DRX configurations to the UE and instructs switching to one of the multiple DRX configurations via specific (group-common) DCI, the BS may configure/indicate that for example, the frequency/time/spatial/power-domain NES techniques are applied to DRX configuration #1, while the techniques are not applied to DRX configuration #2. Alternatively, the BS may configure/indicate that frequency/time/spatial/power-domain NES technique #1 is applied to DRX configuration #1, while frequency/time/spatial/power-domain NES technique #2 is applied to DRX configuration #2. For example, referring to FIG. 14, the BS may configure or associate frequency/time/spatial/power-domain resources #1 with DRX configuration #1, configure or associate frequency/time/spatial/power-domain resources #2 with DRX configuration #2, and configure or associate frequency/time/spatial/power-domain resources #2 with DRX configuration #3. These configurations and/or associations may be provided to UE(s).

In some implementations, a method of substituting the DRX configuration with a BWP may be considered. For example, when the BWP of the UE switches to a specific BWP, frequency/time/spatial/power-domain NES techniques may be applied only to the BWP. Alternatively, frequency/time/spatial/power-domain NES technique #1 may be applied in BWP#1, while frequency/time/spatial/power-domain NES technique #2 may be applied in BWP#2. Notably, when the BS provides multiple DRX configurations and instructs switching to a specific DRX configuration, the BS and UE may change the DRX configuration while performing BWP switching in conjunction. Depending on the DRX configuration and the switched BWP, the frequency/time/spatial/power-domain NES techniques may be applied differently. On the other hand, if BWP switching is performed after the BWP switching is linked with DRX configurations in advance, the BS and UE may also switch to a DRX configuration linked with the corresponding BWP (where the DRX configuration may be for NES mode operation or non-NES operation). For example, BWP#1 may be linked with DRX configuration #1, and BWP#2 may be linked with DRX configuration #2. The BS and UE may change the DRX configuration to a DRX configuration linked with a BWP to which the BS and UE are switching. Additionally, BWP#1 may be linked only with DRX configuration #1, while BWP#2 may be linked with both DRX configuration #1 and DRX configuration #2. In this case, when switched to BWP#2, the DRX configurations #1 and #2 may be dynamically switched. That is, DRX configuration #1 may be applied during a specific time period, and DRX configuration #2 may be applied during other time periods, by using a TDM approach. In this case, DRX configuration #1 may be a DRX configuration for NES mode operation, and DRX configuration #2 may be a DRX configuration for non-NES operation. The DRX configuration for NES mode operation refers to a DRX configuration associated with NES operation or a DRX configuration configured through cell-specific RRC (e.g., cell-specific RRC signaling/parameters). According to the DRX configuration for NES mode operation, during the active time in the DRX cycle, the UE may not perform PDCCH monitoring, and during the time periods outside the active time, the UE may omit reception of common signals/channels such as an SSB/SIB1 or only receive the common signals/channels at a long periodicity. Additionally, when signals such as a PDCCH/PDSCH/CSI-RS/PRS/PUCCH/PUSCH/SRS are configured (semi-statically (e.g., via RRC signaling) or preconfigured) to be repeatedly transmitted/received during the time periods outside the active time, in contrast to general DRX operation where repetitions are performed during the time periods outside the active time, for the DRX configuration intended for NES mode operation, even if signals and channels such as a PDCCH/PDSCH/CSI-RS/PRS/PUCCH/PUSCH/SRS are configured to be repeatedly transmitted/received during the time periods outside the active time, transmission/reception may not be performed on resources for the signals and channels.
**<Method #2> A transmission/reception method when a DRX configuration and a NES mode are configured/indicated to the UE**
   <Method #2-1> If the BS is capable of configuring multiple DRX groups for NES purposes in addition to primary and secondary DRX groups for the UE, the BS may assign an index to each DRX group, use a specific DRX index for a DRX configuration that operates in the same way as conventional UE DRX, and use other DRX index(es) for DRX configuration(s) for NES mode operation. By indicating an index, the BS may configure/indicate whether the UE needs to perform DRX operation or NES operation. In this case, for the DRX configuration(s) for NES mode operation, the UE may skip/omit PDCCH reception during the active time period or may not receive a CSI-RS outside the active time period. Similarly, the UE may not receive a CSI-RS or even an SSB during the time periods outside the active time, operating differently from the conventional DRX operation. The DRX configuration for NES mode operation refers to a DRX configuration associated with NES operation or a DRX configuration configured through cell-specific RRC (e.g., cell-specific RRC signaling/parameters). The above method may be applied not only to C-DRX (i.e., CONNECTED mode DRX) but also to I-DRX (IDLE mode DRX). For example, if the BS provides multiple I-DRX configurations to the UE and indicates the same index as an existing I-DRX configuration, the UE may wake up at the periodicity of the DRX cycle to check for paging on a PO the UE should monitor. However, when an I-DRX index configured for NES purposes is indicated, the UE may be allowed to skip certain PO by monitoring only on POs with a longer periodicity (than one DRX cycle) or monitoring only odd-numbered or even-numbered POs from the existing POs.
   <Method #2-2> According to provided a DRX configuration the UE performs PDCCH monitoring while the onDuration timer is running within a DRX cycle. When the UE receives a PDCCH, the UE starts the inactivity timer starts and maintains the active state during the corresponding time period. Once the timer expires, the UE may enter the sleep mode and stop performing the PDCCH monitoring until a next onDuration. For example, when the UE is configured with C-DRX, the UE is provided with an onDuration, and during each onDuration in the DRX cycle, the UE performs monitoring for PDCCH reception in every slot. If the UE receives a PDCCH during the onDuration, the UE may wait for transmission/reception scheduling from the BS until the inactivity timer expires after it starts. Additionally, when a retransmission timer is running, the UE maintains the active state for retransmission. Here, the active time within the DRX cycle refers to the union of periods during which the UE(s) performs PDCCH monitoring in every slot while operating according to the DRX configurations provided by the BS. Alternatively, in some implementations, the active time may be limited to a period during which the onDuration timer is running, or the active time may be limited to a period corresponding to the union of the time period during which the onDuration timer is running and the time period during which the inactivity timer is running. Additionally, when a timer (used to define/determine the active time) expires, or when the UE receives a DRX command during the active time, the UE enters the inactive time, during which the UE does not receive a PDCCH until a next onDuration in the following DRX cycle. In general DRX configurations, if signals such as a PDCCH/PDSCH/CSI-RS/PRS/PUCCH/PUSCH/SRS are configured to be repeatedly transmitted/received (semi-statically (e.g., via RRC signaling)), the UE may transmit/receive the signals even during the time periods outside the active time. However, if the active period of DRX operation or the resources where the signals such as the PDCCH/PDSCH/CSI-RS/PRS/PUCCH/PUSCH/SRS are configured to repeatedly transmitted overlap with a time period during which the UE operates in the NES mode, the following methods may be applied to UE transmission/reception, which differ from the conventional operation. Additionally, regardless of the DRX operation of the BS (for example, based on a time period during which the BS does not transmit or receive and a time period which repeat periodically), if signals and channels configured to be repeatedly transmitted/received overlap with the time period during which the UE operates in the NES mode, the following methods may be applied.
      > (2-2-1) The UE may defer or extend timers related to DRX operation (e.g., onDuration timer, inactivity timer, retransmission timer, etc.). In this case, deferral means that if the active time is expected to overlap with a NES period, the UE may delay starting the timer until the NES period ends. After the NES period ends, the timer may be started immediately or after a preconfigured/indicated offset value following the end of the NES period.
      > (2-2-2) PDCCH/PDSCH/CSI-RS/PRS/PUCCH/PUSCH/SRS resources, which are configured for repeated transmission/reception (semi-statically (e.g., via RRC signaling)), may be skipped/omitted/deferred. For example, if the PDCCH/PDSCH/CSI-RS/PRS/PUCCH/PUSCH/SRS resources overlap with a NES time period (e.g., a predetermined time period during which specific channels are not transmitted/received when the BS operates in the NES mode, similar to cell DRX/DTX), or if the PDCCH/PDSCH/CSI-RS/PRS/PUCCH/PUSCH/SRS resources are included in the NES time period, the transmission and reception on the resources may be skipped or omitted. Alternatively, the transmission and reception may be performed after the NES time period ends. Additionally, for consecutive PDSCH repetitions, a PDSCH overlapping with the NES time period may be skipped/omitted/deferred, or the entire PDSCH repetition may be dropped.
      > (2-2-3) For DL/UL signals that are not configured for repeated transmission/reception (semi-statically (e.g., via RRC signaling)) but may be dynamically scheduled through DL assignments or UL grants (e.g., PDSCH/PUSCH/PUCCH/SRS/CSI-RS), exceptionally, even if the DL/UL signals are scheduled during the NES mode time period, transmission/reception may still be performed according to the scheduling of the BS. Alternatively, if any of the dynamically scheduled DL/UL signals described above overlap with the NES time period, similar to semi-static DL/UL signals and channels, the UE may discard or ignore the scheduling indication and not perform transmission/reception.
   <Method #2-3> In the proposed methods described above, for timers such as the inactivity timer, retransmission timer, and/or onDuration timer included in C-DRX configurations, when multiple cells are configured for the UE that is provided with the DRX configurations, if the timers of a specific cell are skipped or deferred for NES mode operation on the cell, this may affect not only the timers of the cell but also the timers of all the cells. Therefore, in order to operate only specific cells in the NES mode rather than all the cells configured for the UE, cells belonging to the same DRX group need to be grouped in advance. If there is a cell that the BS desires to operate in the NES mode, the timers for the cell may be skipped or deferred on a cell sub-group basis, where a cell sub-group is to the cell sub-group to which the corresponding cell belongs.

In some implementations of the present disclosure, a DRX configuration for NES purposes (or cell-specific DRX configuration) refer to a (cell-specific) DTX/DRX pattern or active/inactive pattern where a time period during which the BS performs transmission/reception minimally or completely turns off the transmission/reception during a time period of time, which is predefined or preconfigured (in standard documents), and a time period during which the BS performs normal operations are periodically repeated. For example, in the case of the DRX configuration for NES purposes, the UE may not perform PDCCH monitoring during the active time within the DRX cycle, and during the time periods outside the active time, the UE may omit receiving common signals/channels such as an SSB/SIB1 or only perform reception at a long periodicity. Additionally, even if signals such as a PDCCH/PDSCH/CSI-RS/PRS/PUCCH/PUSCH/SRS are configured for repeated transmission/reception during the time periods outside the active time (semi-statically (e.g., via RRC signaling)), the UE may not perform the transmission/reception on resources for the signals and channels. Additionally, when cell-specific DTX/DRX is configured or applied, the NES mode/state may be defined. When the NES mode/state is configured/indicated, the UE and BS may turn off the transmission/reception of some or all DL/UL signals, reduce the amount of frequency resources used for transmission/reception, decrease the number of antenna ports used for transmission, or lower the transmission power in order to save energy during a specific time period where the BS and UE operate in the NES mode, thereby saving energy. Furthermore, a BWP for NES purposes may refer to a specific BWP that switches when NES mode = ON is indicated. This BWP may be one with a smaller amount of frequency resources among BWPs configured for the UE, such as a BWP including a very small number of RBs. If the BS operates in the non-NES mode (i.e., when NES mode = OFF is indicated/configured for UEs in the cell), the transmission/reception of DL/UL signals may be expected to be performed in the same way as normal BS operations. Additionally, the DRX configuration for NES purposes may be the same as the conventional UE C-DRX/I-DRX configuration. (For example, while UE C-DRX and I-DRX are configurations for energy saving of the UE, the BS may also save energy. If the BS properly configures the ON/OFF periods for each UE (e.g., aligning the ON periods of all UEs), the BS may also achieve energy saving. As a result, the C-DRX/I-DRX configuration configured for the UE may be one of the DRX configurations for NES purposes.) Furthermore, the DRX configuration for NES purposes may also refer to a dynamic indication of a time-domain ON/OFF pattern for (multiple) predetermined DL/UL signals and channels through L1 signaling (e.g., group-common DCI) or L2 signaling (e.g., MAC CE).

The methods described in Method #1 and Method #2 may be applied individually or together.

According to some implementations of the present disclosure, since different levels of sleep modes or DRX configurations may be applied depending on the situation of the BS, the energy of both the BS and UE may be operated more efficiently.

According to some implementations of the present disclosure, sleep modes or DRX configurations may be associated with the configurations of frequency/time/spatial/power-domain resources, and thus changes in one of the DRX configurations (or sleep modes) may result in changes in the associated configuration, thereby reducing signaling overhead.

In conventional DRX configurations, changes are made through signaling from the RRC layer, which is higher than the physical layer or MAC layer. In contrast, according to some implementations of the present disclosure, from the perspective of a cell, multiple sleep modes or DRX configurations applicable to the cell may be provided. The BS may indicate one of the multiple sleep modes or DRX configurations through group-common DCI or a group-common MAC CE, the DRX configuration or sleep mode to be applied to the cell may be changed relatively quickly.

Additionally, compared to conventional DRX where a cell is associated with only one DRX parameter set, a cell may be associated with multiple DRX parameter sets according to some implementations of the present disclosure.

Additionally, compared to conventional DRX where DRX/DTX is controlled in the time domain, DRX/DTX may also be controlled in the frequency domain, spatial domain, and/or power domain according to some implementations of the present disclosure.

Additionally, according to some implementations of the present disclosure, the BS may control energy usage more precisely based on the DRX configuration and NES mode.

Additionally, according to some implementations of the present disclosure, energy saving for the BS or network may be achieved while minimizing the impact on data communication between the UE and BS.

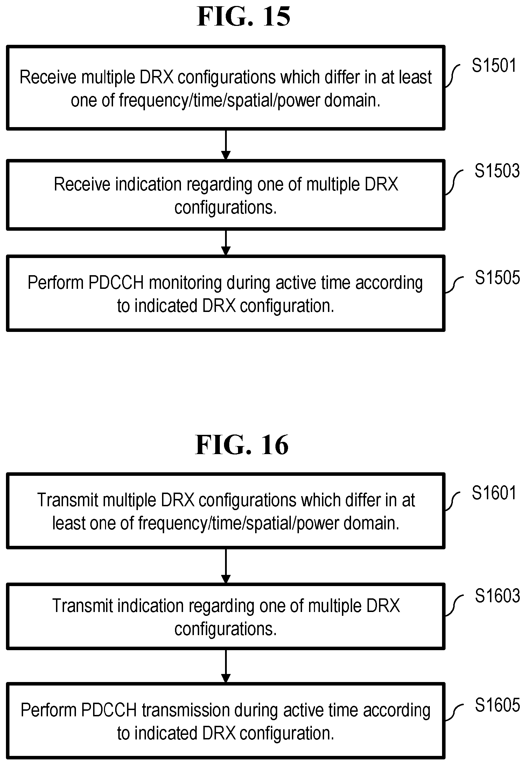

FIG. 15 illustrates a flow of DL signal reception by a UE according to some implementations of the present disclosure.

The UE may perform operations according to some implementations of the present disclosure in association with DL signal receptions. The UE may include at least one transceiver; at least one processor; and at least one computer memory operably connectable to the at least one processor and storing instructions that, when executed, cause the at least one processor to perform operations according to some implementations of the present disclosure. A processing device for a UE may include at least one processor; and at least one computer memory operably connectable to the at least one processor and storing instructions that, when executed, cause the at least one processor to perform operations according to some implementations of the present disclosure. A computer readable (non-transitory) storage medium may store at least one computer program including instructions that, when executed by at least one processor, cause the at least one processor to perform operations according to some implementations of the present disclosure. A computer program or a computer program product may include instructions recorded in at least one computer readable (non-transitory) storage medium and causing, when executed, (at least one processor) to perform operations according to some implementations of the present disclosure.

A method performed by the UE or the operations of the UE, processing device, computer-readable (non-transitory) storage medium, and/or computer program product may include: receiving a plurality of DRX configurations respectively associated with different resources in at least one of a frequency, time, spatial, or power domain (S1501); and based on receiving a first group-common DL signal indicating a first DRX configuration related to a cell (S1503), performing PDCCH monitoring during an active time according to the first DRX configuration (S1505).

In some implementations, the method or operations may include: detecting an SSB on the cell; and acquiring time and frequency synchronization with the cell based on the SSB.

In some implementations, the plurality of DRX configurations may include a DRX configuration associated with a BWP different from a BWP associated with the first DRX configuration.

In some implementations, the plurality of DRX configurations may include a DRX configuration associated with a time-domain ON/OFF pattern different from a time-domain ON/OFF pattern associated with the first DRX configuration.

In some implementations, the plurality of DRX configurations may include a DRX configuration associated with a number of antenna ports different from a number of antenna ports associated with the first DRX configuration.

In some implementations, the plurality of DRX configurations may include a DRX configuration associated with a power parameter different from a power parameter associated with the first DRX configuration.

In some implementations, the method or operations may include, even if DL reception or UL transmission, which is configured to be performed repeatedly, overlaps with an inactive time according to the first DRX configuration, performing the overlapping DL reception or UL transmission.

In some implementations, the method or operations may include: receiving a configuration related to a network energy saving mode; and based on DL reception or UL transmission, which is configured to be performed repeatedly, overlapping with a time period for the network energy saving mode, omitting the overlapping DL reception or UL transmission.

In some implementations, the method or operations may include: receiving a configuration related to a network energy saving mode; and based on DL reception or UL transmission, which overlaps with a time period for the network energy saving mode, being scheduled by a DCI format, performing the overlapping DL reception or UL transmission.

FIG. 16 illustrates a flow of DL signal transmission by a BS according to some implementations of the present disclosure.

The BS may perform operations according to some implementations of the present disclosure in association with DL signal transmissions. The BS may include at least one transceiver; at least one processor; and at least one computer memory operably connectable to the at least one processor and storing instructions that, when executed, cause the at least one processor to perform operations according to some implementations of the present disclosure. A processing device for a BS may include at least one processor; and at least one computer memory operably connectable to the at least one processor and storing instructions that, when executed, cause the at least one processor to perform operations according to some implementations of the present disclosure. A computer readable (non-volatile) storage medium may store at least one computer program including instructions that, when executed by at least one processor, cause the at least one processor to perform operations according to some implementations of the present disclosure. A computer program or a computer program product may include instructions recorded in at least one computer readable (non-volatile) storage medium and causing, when executed, (at least one processor) to perform operations according to some implementations of the present disclosure.

A method performed by the BS or the operations of the BS, processing device, computer-readable (non-transitory) storage medium, and/or computer program product may include: transmitting a plurality of DRX configurations respectively associated with different resources in at least one of a frequency, time, spatial, or power domains (S1601); and based on transmitting a first group-common downlink signal indicating a first DRX configuration related to a cell (S1603), performing PDCCH transmission during an active time according to the first DRX configuration (S1605).

In some implementations, the method or operations may include transmitting an SSB on the cell.

In some implementations, the method or operations may include receiving a RACH associated with the SSB.

In some implementations, the plurality of DRX configurations may include a DRX configuration associated with a BWP different from a BWP associated with the first DRX configuration.

In some implementations, the plurality of DRX configurations may include a DRX configuration associated with a time-domain ON/OFF pattern different from a time-domain ON/OFF pattern associated with the first DRX configuration.

In some implementations, the plurality of DRX configurations may include a DRX configuration associated with a number of antenna ports different from a number of antenna ports associated with the first DRX configuration.

In some implementations, the plurality of DRX configurations may include a DRX configuration associated with a power parameter different from a power parameter associated with the first DRX configuration.

In some implementations, the method or operations may include, even if DL transmission or UL reception, which is configured to be performed repeatedly, overlaps with an inactive time according to the first DRX configuration, performing the overlapping DL transmission or UL reception.

In some implementations, the method or operations may include: transmitting a configuration related to a network energy saving mode; and based on DL transmission or UL reception, which is configured to be performed repeatedly, overlapping with a time period for the network energy saving mode, omitting the overlapping DL transmission or UL reception.

In some implementations, the method or operations may include: transmitting a configuration related to a network energy saving mode; and based on DL transmission or UL reception, which overlaps with a time period for the network energy saving mode, being scheduled by a DCI format, performing the overlapping DL transmission or UL reception.

The examples of the present disclosure as described above have been presented to enable any person of ordinary skill in the art to implement and practice the present disclosure. Although the present disclosure has been described with reference to the examples, those skilled in the art may make various modifications and variations in the example of the present disclosure. Thus, the present disclosure is not intended to be limited to the examples set for the herein, but is to be accorded the broadest scope consistent with the principles and features disclosed herein.

The implementations of the present disclosure may be used in a BS, a UE, or other equipment in a wireless communication system.

## Claims

1. A method of receiving a downlink signal by a user equipment (UE) in a wireless communication system, the method comprising:
detecting a synchronization signal block (SSB) on a cell, wherein the SSB includes a primary synchronization signal (PSS), a secondary synchronization signal (SSS), and a physical broadcast channel (PBCH);
acquiring time and frequency synchronization with the cell based on the SSB;
receiving a plurality of discontinuous reception (DRX) configurations; and
based on receiving a first group-common downlink signal indicating a first DRX configuration related to the cell among the plurality of DRX configurations, performing physical downlink control channel (PDCCH) monitoring during an active time according to the first DRX configuration,
wherein the plurality of DRX configurations are associated with different resources in at least one of a frequency domain, a time domain, a spatial domain, or a power domain, respectively.

2. The method of claim 1, wherein the plurality of DRX configurations include a DRX configuration associated with a bandwidth part (BWP) different from a BWP associated with the first DRX configuration.

3. The method of claim 1, wherein the plurality of DRX configurations include a DRX configuration associated with a time-domain ON/OFF pattern different from a time-domain ON/OFF pattern associated with the first DRX configuration.

4. The method of claim 1, wherein the plurality of DRX configurations include a DRX configuration associated with a number of antenna ports different from a number of antenna ports associated with the first DRX configuration.

5. The method of claim 1, wherein the plurality of DRX configurations include a DRX configuration associated with a power parameter different from a power parameter associated with the first DRX configuration.

6. The method of claim 1, comprising:
even when downlink reception or uplink transmission, which is configured to be performed repeatedly, overlaps with an inactive time according to the first DRX configuration, performing the overlapping downlink reception or uplink transmission.

7. The method of claim 1, comprising:
receiving a configuration related to a network energy saving mode; and
based on downlink reception or uplink transmission, which is configured to be performed repeatedly, overlapping with a time period for the network energy saving mode, omitting the overlapping downlink reception or uplink transmission.

8. The method of claim 1, comprising:
receiving a configuration related to a network energy saving mode; and
based on downlink reception or uplink transmission, which overlaps with a time period for the network energy saving mode, being scheduled by a downlink control information (DCI) format, performing the overlapping downlink reception or uplink transmission.

9. A user equipment (UE) configured to receive a downlink signal in a wireless communication system, the UE comprising:
at least one transceiver;
at least one processor; and
at least one computer memory operably connected to the at least one processor and storing instructions that, when executed, cause the at least one processor to perform operations comprising:
detecting a synchronization signal block (SSB) on a cell, wherein the SSB includes a primary synchronization signal (PSS), a secondary synchronization signal (SSS), and a physical broadcast channel (PBCH);
acquiring time and frequency synchronization with the cell based on the SSB;
receiving a plurality of discontinuous reception (DRX) configurations; and
based on receiving a first group-common downlink signal indicating a first DRX configuration related to the cell among the plurality of DRX configurations, performing physical downlink control channel (PDCCH) monitoring during an active time according to the first DRX configuration,
wherein the plurality of DRX configurations are associated with different resources in at least one of a frequency domain, a time domain, a spatial domain, or a power domain, respectively.

10. A processing device in a wireless communication system, the processing device comprising:
at least one processor; and
at least one computer memory operably connected to the at least one processor and storing instructions that, when executed, cause the at least one processor to perform operations comprising:
detecting a synchronization signal block (SSB) on a cell, wherein the SSB includes a primary synchronization signal (PSS), a secondary synchronization signal (SSS), and a physical broadcast channel (PBCH);
acquiring time and frequency synchronization with the cell based on the SSB;
receiving a plurality of discontinuous reception (DRX) configurations; and
based on receiving a first group-common downlink signal indicating a first DRX configuration related to the cell among the plurality of DRX configurations, performing physical downlink control channel (PDCCH) monitoring during an active time according to the first DRX configuration,
wherein the plurality of DRX configurations are associated with different resources in at least one of a frequency domain, a time domain, a spatial domain, or a power domain, respectively.

11. A computer-readable storage medium configured to store at least one program code comprising instructions that, when executed, cause at least one processor to perform operations comprising:
detecting a synchronization signal block (SSB) on a cell, wherein the SSB includes a primary synchronization signal (PSS), a secondary synchronization signal (SSS), and a physical broadcast channel (PBCH);
acquiring time and frequency synchronization with the cell based on the SSB;
receiving a plurality of discontinuous reception (DRX) configurations; and
based on receiving a first group-common downlink signal indicating a first DRX configuration related to the cell among the plurality of DRX configurations, performing physical downlink control channel (PDCCH) monitoring during an active time according to the first DRX configuration,
wherein the plurality of DRX configurations are associated with different resources in at least one of a frequency domain, a time domain, a spatial domain, or a power domain, respectively.

12. A method of transmitting, by a base station (BS), a downlink signal to a user equipment (UE) in a wireless communication system,
the method comprising:
transmitting a synchronization signal block (SSB) on a cell, wherein the SSB includes a primary synchronization signal (PSS), a secondary synchronization signal (SSS), and a physical broadcast channel (PBCH);
transmitting a plurality of discontinuous reception (DRX) configurations; and
based on transmitting a first group-common downlink signal indicating a first DRX configuration related to the cell among the plurality of DRX configurations, transmitting a physical downlink control channel (PDCCH) during an active time according to the first DRX configuration,
wherein the plurality of DRX configurations are associated with different resources in at least one of a frequency domain, a time domain, a spatial domain, or a power domain, respectively.

13. A base station (BS) configured to transmit a downlink signal to a user equipment (UE) in a wireless communication system, the BS comprising:
at least one transceiver;
at least one processor; and
at least one computer memory operably connected to the at least one processor and storing instructions that, when executed, cause the at least one processor to perform operations comprising:
transmitting a synchronization signal block (SSB) on a cell, wherein the SSB includes a primary synchronization signal (PSS), a secondary synchronization signal (SSS), and a physical broadcast channel (PBCH);
transmitting a plurality of discontinuous reception (DRX) configurations; and
based on transmitting a first group-common downlink signal indicating a first DRX configuration related to the cell among the plurality of DRX configurations, transmitting a physical downlink control channel (PDCCH) during an active time according to the first DRX configuration,
wherein the plurality of DRX configurations are associated with different resources in at least one of a frequency domain, a time domain, a spatial domain, or a power domain, respectively.

14. The BS of claim 13, wherein the plurality of DRX configurations include a DRX configuration associated with a bandwidth part (BWP) different from a BWP associated with the first DRX configuration.

15. The BS of claim 13, wherein the plurality of DRX configurations include a DRX configuration associated with a time-domain ON/OFF pattern different from a time-domain ON/OFF pattern associated with the first DRX configuration.

16. The BS of claim 13, wherein the plurality of DRX configurations include a DRX configuration associated with a number of antenna ports different from a number of antenna ports associated with the first DRX configuration.

17. The BS of claim 13, wherein the plurality of DRX configurations include a DRX configuration associated with a power parameter different from a power parameter associated with the first DRX configuration.

18. The BS of claim 13, wherein the operations comprise:
even when downlink transmission or uplink reception, which is configured to be performed repeatedly, overlaps with an inactive time according to the first DRX configuration, performing the overlapping downlink transmission or uplink reception.

19. The BS of claim 13, wherein the operations comprise:
transmitting a configuration related to a network energy saving mode; and
based on downlink transmission or uplink reception, which is configured to be performed repeatedly, overlapping with a time period for the network energy saving mode, omitting the overlapping downlink transmission or uplink reception.

20. The BS of claim 13, wherein the operations comprise:
transmitting a configuration related to a network energy saving mode; and
based on downlink transmission or uplink reception, which overlaps with a time period for the network energy saving mode, being scheduled by a downlink control information (DCI) format, performing the overlapping downlink transmission or uplink reception.
